# EUROPEAN PATENT APPLICATION

(11) **EP 4 611 447 A1**
(43) Date of publication of application: **03.09.2025**
(21) Application number: 24741332.1
(22) Date of filing: 11.01.2024
(51) Int. Cl.: H04W 60/00, H04W 84/18

(54) **COMMUNICATION METHOD AND APPARATUS**

(30) Priority: 14.01.2023 CN 202310199911; 10.03.2023 CN 202310269985
(71) Applicant: Huawei Technologies Co., Ltd., Shenzhen, Guangdong 518129 (CN)
(72) Inventor: HE, Hongli, Shenzhen, Guangdong 518129 (CN); DOU, Fenghui, Shenzhen, Guangdong 518129 (CN); LI, Xueru, Shenzhen, Guangdong 518129 (CN)
(74) Representative: Gill Jennings & Every LLP
(86) International application number: PCT/CN2024/071867
(87) International publication number: WO 2024/149336

(57) **Abstract**

This application provides a communication method and apparatus. A PC5 connection between terminal devices is used as an implementation of a bridge, so that integration between a mobile communication system (for example, a 5GS) and another network (for example, a TSN network) can be supported over the PC5 connection, thereby improving a capability of the mobile communication system to support the another network, and improving deployment flexibility of the network. The method includes: A first function node determines first information, and sends the first information to a second function node. The first information indicates a first bridge, and the first bridge includes a PC5 connection between at least two terminal devices and device-side translator ports of the at least two terminal devices; and the first information includes at least one of an identifier of the first bridge, a quantity of ports in the first bridge, or port numbers of the device-side translator ports of the at least two terminal devices. The first function node may be an AF network element, or the first function node may be deployed on a first terminal device. The second function node may be TSN CNC.

## Description

This application claims priorities to Chinese Patent Application No. 202310199911.0, filed with the China National Intellectual Property Administration on January 14, 2023 and entitled "TIME-SENSITIVE NETWORK BRIDGE TRANSMISSION METHOD AND APPARATUS", and to Chinese Patent Application No. 202310269985.7, filed with the China National Intellectual Property Administration on March 10, 2023 and entitled "COMMUNICATION METHOD AND APPARATUS" which are incorporated herein by reference in their entireties.

### TECHNICAL FIELD

This application relates to the communication field, and in particular, to a communication method and apparatus.

### BACKGROUND

Time-sensitive networking (time-sensitive networking, TSN) defines a time-sensitive mechanism for Ethernet data transmission, thus increasing determinism and reliability to a standard Ethernet to ensure that the Ethernet can provide stable and consistent services for critical data transmission.

Conventional TSN is usually deployed by using a wired Ethernet, and may be applied to a scenario with high requirements on a delay and reliability, for example, factories. With development of a fifth generation (fifth generation, 5G) mobile communication technology, a current 5G network has implemented support for the TSN. For example, a 5G system (5G system, 5GS) may be integrated into the TSN in a form of TSN bridge.

The support of 5G network for the TSN allows some connections in the TSN to be wireless. However, currently, only a Uu communication-based 5GS TSN bridge is defined, that is, the current 5GS has limited support for TSN communication.

### SUMMARY

This application provides a communication method and apparatus, to improve a capability of a mobile communication system to support another network, thereby improving deployment flexibility of the network.

According to a first aspect, a communication method is provided. The method may be performed by a first function node, may be performed by a component in the first function node, for example, a processor, a chip, or a chip system in the first function node, or may be implemented by a logical module or software that can implement all or some functions of the first function node. The method includes: determining first information, and sends the first information to a second function node. The first information indicates a first bridge, and the first bridge includes a proximity-based service connection 5 PC5 connection between at least two terminal devices and device-side translator ports of the at least two terminal devices. The first information includes at least one of an identifier of the first bridge, a quantity of ports in the first bridge, or port numbers of the device-side translator ports of the at least two terminal devices.

Based on this solution, in this application, the PC5 connection between the terminal devices is used as an implementation of a bridge, so that integration between a mobile communication system (for example, a 5GS) and another network (for example, a TSN network) can be supported by using the PC5 connection, thereby improving a capability of the mobile communication system to support the another network, and improving deployment flexibility of the network.

In a possible design, the at least two terminal devices include a first terminal device and a second terminal device; and before determining the first information, the method further includes: receiving second information from the first terminal device, where the second information indicates a first PC5 connection, and the first PC5 connection is a PC5 connection between the first terminal device and the second terminal device.

In a possible design, the second information includes a first layer 2 identifier and a second layer 2 identifier. The first layer 2 identifier is an identifier of the first terminal device on the first PC5 connection, and the second layer 2 identifier is an identifier of the second terminal device on the first PC5 connection.

Based on the possible design, there may be a binding relationship or an association relationship between the first layer 2 identifier on the first PC5 connection and a device-side translator port of the first terminal device, and there may be a binding relationship or an association relationship between the second layer 2 identifier on the first PC5 connection and a device-side translator port of the second terminal device, so that the first layer 2 identifier and the second layer 2 identifier may indicate or identify the first PC5 connection.

In a possible design, the second information includes an identifier of the first PC5 connection.

In a possible design, the second information further includes at least one of the following: first identifier information, second identifier information, device-side translator port management capability information of the first terminal device, or first application information. The first identifier information includes at least one of the following: a medium access control MAC address corresponding to the device-side translator port of the first terminal device, an international mobile subscriber identity IMSI of the first terminal device, a temporary mobile subscriber identity TMSI of the first terminal device, or an international mobile equipment identity IMEI of the first terminal device. The second identifier information includes at least one of the following: a MAC address corresponding to a device-side translator port of the second terminal device, an IMSI of the second terminal device, a TMSI of the second terminal device, or an IMEI of the second terminal device. The device-side translator port management capability information of the first terminal device includes a traffic class table supported by a device-side translator of the first terminal device, and the like. The first application information includes at least one of the following: an application identifier associated with the first PC5 connection, an application group identifier associated with the first PC5 connection, an application layer identifier associated with the first PC5 connection, or an identifier of a network served by the first terminal device.

In a possible design, before determining the first information, the method further includes: receiving third information from the second terminal device, where the third information indicates the first PC5 connection.

In a possible design, the determining first information includes: allocating port numbers to the device-side translator ports of the at least two terminal devices.

In a possible design, the determining first information includes: determining the identifier of the first bridge.

In a possible design, the at least two terminal devices include a first terminal device and a second terminal device; and the method further includes: receiving fourth information from a third function node, where the fourth information includes information about the first bridge, and the fourth information indicates that a device-side translator port of the first terminal device is associated with a device-side translator port of the second terminal device.

In a possible design, the fourth information indicates that the device-side translator port of the first terminal device is associated with the device-side translator port of the second terminal device through a first PC5 connection, and the first PC5 connection is a PC5 connection between the first terminal device and the second terminal device.

In a possible design, the fourth information includes at least one of the following: an identifier of the first bridge, a port number of the device-side translator port of the first terminal device, a port number of the device-side translator port of the second terminal device, an association relationship between the device-side translator port of the first terminal device and the device-side translator port of the second terminal device, or information indicating the first PC5 connection, where the first PC5 connection is the PC5 connection between the first terminal device and the second terminal device.

In some possible designs, the association relationship between the device-side translator port of the first terminal device and the device-side translator port of the second terminal device may indicate that the two device-side translator ports are ports associated through a PC5 connection (for example, a first PC5 connection).

In a possible design, the fourth information further includes a MAC address corresponding to the device-side translator port of the first terminal device and/or a MAC address corresponding to the device-side translator port of the second terminal device.

In a possible design, the third function node is a policy control function PCF network element, or the third function node is deployed on the first terminal device.

In a possible design, the first terminal device has a node management function.

In a possible design, the first function node is an application function AF network element.

In a possible design, the first function node is a PCF network element.

In a possible design, the at least two terminal devices include a first terminal device, and the first function node is deployed on the first terminal device, and the first terminal device has a control plane conversion function and a node management function (or an AF function or a TSN AF function).

In a possible design, the at least two terminal devices further include a second terminal device, and the method further includes: sending fifth information to the second terminal device, where the fifth information indicates that the first function node is deployed on the first terminal device. It may also be understood that the fifth information indicates that the first terminal device has the control plane conversion function and the node management function, or indicates that the first terminal device has the AF function or the TSN AF function, or the fifth information indicates that the first terminal device can report, to the second function node, the first information indicating the first bridge.

In a possible design, the at least two terminal devices include a first terminal device and a second terminal device; and the method further includes: configuring a device-side translator of the first terminal device to perform link layer neighbor discovery on behalf of a device-side translator of the second terminal device.

Based on the possible design, the device-side translator of the second terminal device does not need to have a link layer neighbor discovery capability, so that a capability requirement on the second terminal device can be reduced.

In a possible design, the second function node is a centralized network configuration CNC network element in time-sensitive networking TSN.

According to a second aspect, a communication method is provided. The method may be performed by a third function node, may be performed by a component in the third function node, for example, a processor, a chip, or a chip system in the third function node, or may be implemented by a logical module or software that can implement all or some functions of the third function node. The method includes: determining fourth information, and sending the fourth information to a first function node. The fourth information includes information about a first bridge, the first bridge includes a proximity-based service connection 5 PC5 connection between at least two terminal devices and device-side translator ports of the at least two terminal devices, and the at least two terminal devices include a first terminal device and a second terminal device. There is a first PC5 connection between the first terminal device and the second terminal device. The fourth information indicates that a device-side translator port of the first terminal device is associated with a device-side translator port of the second terminal device.

Based on this solution, integration between a mobile communication system (for example, a 5GS) and another network (for example, a TSN network) can be supported by using the PC5 connection, thereby improving a capability of the mobile communication system to support the another network, and improving deployment flexibility of the network. In addition, the third function node performs a node management function to determine the structure of the bridge, thereby reducing implementation complexity of the first function node.

In a possible design, the fourth information indicates that the device-side translator port of the first terminal device is associated with the device-side translator port of the second terminal device through the first PC5 connection.

In a possible design, the fourth information includes at least one of the following: an identifier of the first bridge, a port number of the device-side translator port of the first terminal device, a port number of the device-side translator port of the second terminal device, or information indicating the first PC5 connection.

In a possible design, at least one of the identifier of the first bridge, the port number of the device-side translator port of the first terminal device, and the port number of the device-side translator port of the second terminal device is determined based on configuration information.

In a possible design, before determining the fourth information, the method further includes: receiving third information from the second terminal device, where the third information indicates the first PC5 connection.

In a possible design, before determining the fourth information, the method further includes: receiving second information from the first terminal device, where the second information indicates the first PC5 connection.

In a possible design, the second information includes a first layer 2 identifier and a second layer 2 identifier. The first layer 2 identifier is an identifier of the first terminal device on the first PC5 connection, and the second layer 2 identifier is an identifier of the second terminal device on the first PC5 connection.

In a possible design, the second information includes an identifier of the first PC5 connection.

In a possible design, the second information further includes at least one of the following: first identifier information, second identifier information, device-side translator port management capability information of the first terminal device, or first application information. The first identifier information includes at least one of the following: a medium access control MAC address corresponding to the device-side translator port of the first terminal device, an international mobile subscriber identity IMSI of the first terminal device, a temporary mobile subscriber identity TMSI of the first terminal device, or an international mobile equipment identity IMEI of the first terminal device. The second identifier information includes at least one of the following: a MAC address corresponding to a device-side translator port of the second terminal device, an IMSI of the second terminal device, a TMSI of the second terminal device, or an IMEI of the second terminal device. The device-side translator port management capability information of the first terminal device includes a traffic class table supported by a device-side translator of the first terminal device, and the like. The first application information includes at least one of the following: an application identifier associated with the first PC5 connection, an application group identifier associated with the first PC5 connection, an application layer identifier associated with the first PC5 connection, or an identifier of a network served by the first terminal device.

In a possible design, the third function node is deployed on the first terminal device.

In a possible design, the method further includes: sending sixth information to the second terminal device, where the sixth information indicates that the third function node is deployed on the first terminal device. Alternatively, it may also be understood that the first terminal device has a node management function.

In a possible design, the third function node is a policy control function PCF network element.

In a possible design, the first function node is an application function AF network element.

According to a third aspect, a communication method is provided. The method may be performed by a second terminal device, may be performed by a component in the second terminal device, for example, a processor, a chip, or a chip system in the second terminal device, or may be implemented by a logical module or software that can implement all or some functions of the second terminal device. The method includes: establishing a first PC5 connection to a first terminal device; and sending third information to a first function node or a third function node, where the third information indicates a first PC5 connection, the third information is further used to determine a first bridge, and the first bridge includes a PC5 connection between at least two terminal devices and device-side translator ports of the at least two terminal devices. The at least two terminal devices include a first terminal device and a second terminal device.

Based on this solution, after establishing the first PC5 connection to the first terminal device, the second terminal device sends the third information to the first function node or the third function node, to indicate the first PC5 connection, so that the first function node or the third function node learns that the first PC5 connection exists in a mobile communication system, and further determines the first bridge, to support integration between the mobile communication system (for example, a 5GS) and another network (for example, a TSN network) by using the PC5 connection, thereby improving a capability of the mobile communication system to support the another network, and improving deployment flexibility of the network.

In a possible design, the third information includes a first layer 2 identifier and a second layer 2 identifier. The first layer 2 identifier is an identifier of the first terminal device on the first PC5 connection, and the second layer 2 identifier is an identifier of the second terminal device on the first PC5 connection.

In a possible design, the third information includes an identifier of the first PC5 connection.

In a possible design, the third information further includes at least one of the following: first identifier information, second identifier information, device-side translator port management capability information of the second terminal device, or second application information. The first identifier information includes at least one of the following: a medium access control MAC address corresponding to the device-side translator port of the first terminal device, an international mobile subscriber identity IMSI of the first terminal device, a temporary mobile subscriber identity TMSI of the first terminal device, or an international mobile equipment identity IMEI of the first terminal device. The second identifier information includes at least one of the following: a medium access control MAC address corresponding to the device-side translator port of the second terminal device, an international mobile subscriber identity IMSI of the second terminal device, a temporary mobile subscriber identity TMSI of the second terminal device, or an international mobile equipment identity IMEI of the second terminal device. The second application information includes at least one of the following: an application identifier associated with the first PC5 connection, an application group identifier associated with the first PC5 connection, an application layer identifier associated with the first PC5 connection, or an identifier of a network served by the second terminal device.

In a possible design, the first function node is deployed on the first terminal device; and the method further includes: receiving fifth information from the first terminal device, where the fifth information indicates that the first function node is deployed on the first terminal device. It may also be understood that the fifth information indicates that the first terminal device has a control plane conversion function and a node management function, the fifth information indicates that the first terminal device has an AF function or a TSN AF function, or the fifth information indicates that the first terminal device can report, to a second function node, first information indicating the first bridge.

In a possible design, the third function node is deployed on the first terminal device; and the method further includes: receiving sixth information from the first terminal device, where the sixth information indicates that the third function node is deployed on the first terminal device. Alternatively, it may also be understood that the first terminal device has a node management function.

According to a fourth aspect, a communication method is provided. The method may be performed by a first terminal device, may be performed by a component in the first terminal device, for example, a processor, a chip, or a chip system in the first terminal device, or may be implemented by a logical module or software that can implement all or some functions of the first terminal device. The method includes: establishing a first PC5 connection to a second terminal device; and determining information about the first PC5 connection. The information about the first PC5 connection is used to determine a first bridge, and the first bridge includes a PC5 connection between at least two terminal devices and device-side translator ports of the at least two terminal devices. The at least two terminal devices include the first terminal device and the second terminal device.

Based on this solution, after establishing the first PC5 connection to the second terminal device, the first terminal device determines the information about the first PC5 connection, so that the first bridge can be subsequently determined based on the information about the first PC5 connection, to support integration between a mobile communication system (for example, a 5GS) and another network (for example, a TSN network) by using the PC5 connection, thereby improving a capability of the mobile communication system to support the another network, and improving deployment flexibility of the network.

In a possible design, the method further includes: sending second information to a first function node or a third function node, where the second information is determined based on the information about the first PC5 connection.

In a possible design, the second information includes a first layer 2 identifier and a second layer 2 identifier. The first layer 2 identifier is an identifier of the first terminal device on the first PC5 connection, and the second layer 2 identifier is an identifier of the second terminal device on the first PC5 connection.

In a possible design, the second information includes an identifier of the first PC5 connection.

In a possible design, the second information further includes at least one of the following: first identifier information, second identifier information, device-side translator port management capability information of the first terminal device, or first application information. The first identifier information includes at least one of the following: a medium access control MAC address corresponding to the device-side translator port of the first terminal device, an international mobile subscriber identity IMSI of the first terminal device, a temporary mobile subscriber identity TMSI of the first terminal device, or an international mobile equipment identity IMEI of the first terminal device. The second identifier information includes at least one of the following: a medium access control MAC address corresponding to the device-side translator port of the second terminal device, an international mobile subscriber identity IMSI of the second terminal device, a temporary mobile subscriber identity TMSI of the second terminal device, or an international mobile equipment identity IMEI of the second terminal device. The first application information includes at least one of the following: an application identifier associated with the first PC5 connection, an application group identifier associated with the first PC5 connection, an application layer identifier associated with the first PC5 connection, or an identifier of a network served by the first terminal device.

In a possible design, a first function node is deployed on the first terminal device, or the first terminal device has a control plane conversion function and a node management function, or the first terminal device has an AF function or a TSN AF function. The method further includes: sending first information to a second function node, where the first information indicates the first bridge, and the first information includes at least one of an identifier of the first bridge, a quantity of ports in the first bridge, or port numbers of the device-side translator ports of the at least two terminal devices.

In a possible design, the method further includes: sending fifth information to the second terminal device, where the fifth information indicates that the first function node is deployed on the first terminal device. It may also be understood that the fifth information indicates that the first terminal device has a control plane conversion function and a node management function, the fifth information indicates that the first terminal device has an AF function or a TSN AF function, or the fifth information indicates that the first terminal device can report, to a second function node, first information indicating the first bridge.

In a possible design, the method further includes: obtaining authorization information, where the authorization information is used to authorize the first terminal device to have a control plane conversion function and a node management function, or the authorization information is used to authorize the first terminal device to have an AF function or a TSN AF function.

In a possible design, a third function node is deployed on the first terminal device, or the first terminal device has a node management function. The method further includes: sending fourth information to the first function node, where the fourth information includes information about a first bridge, the first bridge includes a PC5 connection between at least two terminal devices and device-side translator ports of the at least two terminal devices, and the at least two terminal devices include a first terminal device and a second terminal device. There is a first PC5 connection between the first terminal device and the second terminal device. The fourth information indicates that a device-side translator port of the first terminal device is associated with a device-side translator port of the second terminal device.

In a possible design, the fourth information indicates that the device-side translator port of the first terminal device is associated with the device-side translator port of the second terminal device through the first PC5 connection.

In a possible design, the method further includes: sending sixth information to the second terminal device, where the sixth information indicates that the third function node is deployed on the first terminal device. Alternatively, it may also be understood that the first terminal device has a node management function.

In a possible design, the method further includes: obtaining authorization information, where the authorization information is used to authorize the first terminal device to have a node management function.

In a possible design, the authorization information includes at least one of the following: a device-side translator port number list or at least one bridge identifier.

According to a fifth aspect, a communication apparatus is provided, and is configured to implement the foregoing methods. The communication apparatus may be the first function node in the first aspect, or an apparatus, for example, a chip, included in the first function node; the communication apparatus may be the third function node in the second aspect, or an apparatus, for example, a chip, included in the third function node; the communication apparatus may be the second terminal device in the third aspect, or an apparatus, for example, a chip, included in the second terminal device; or the communication apparatus may be the first terminal device in the fourth aspect, or an apparatus, for example, a chip, included in the first terminal device.

The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

In some possible designs, the communication apparatus may include a processing module and a transceiver module. The transceiver module may include a sending module and a receiving module, which are respectively configured to implement a sending function and a receiving function in any one of the foregoing aspects and any possible design of the foregoing aspects. The processing module may be configured to implement a processing function in any one of the foregoing aspects and any possible design of the foregoing aspects.

According to a sixth aspect, a communication apparatus is provided, including at least one processor. The processor is configured to enable, by executing computer instructions stored in a memory or by using a logic circuit, the communication apparatus to perform the method according to any one of the foregoing aspects. The communication apparatus may be the first function node in the first aspect, or an apparatus, for example, a chip, included in the first function node; the communication apparatus may be the third function node in the second aspect, or an apparatus, for example, a chip, included in the third function node; the communication apparatus may be the second terminal device in the third aspect, or an apparatus, for example, a chip, included in the second terminal device; or the communication apparatus may be the first terminal device in the fourth aspect, or an apparatus, for example, a chip, included in the first terminal device.

In some possible designs, the communication apparatus further includes the memory, configured to store the computer instructions and/or a configuration file of the logic circuit. Optionally, the memory is integrated with the processor, or the memory is independent of the processor.

According to a seventh aspect, a communication apparatus is provided, including a processor and a communication interface. The communication interface is configured to: input and/or output a signal. The processor is configured to execute a computer program or instructions, to enable the communication apparatus to perform the method according to any one of the foregoing aspects. The communication apparatus may be the first function node in the first aspect, or an apparatus, for example, a chip, included in the first function node; the communication apparatus may be the third function node in the second aspect, or an apparatus, for example, a chip, included in the third function node; the communication apparatus may be the second terminal device in the third aspect, or an apparatus, for example, a chip, included in the second terminal device; or the communication apparatus may be the first terminal device in the fourth aspect, or an apparatus, for example, a chip, included in the first terminal device.

In some possible designs, the communication interface is an interface circuit, and is configured to: read and write computer instructions. For example, the interface circuit is configured to: receive computer-executable instructions (where the computer-executable instructions are stored in a memory, and may be directly read from the memory or through another device) and transmit the computer-executable instructions to the processor.

In some possible designs, the communication interface is configured to communicate with a module other than the communication apparatus.

In some possible designs, the communication apparatus may be a chip or a chip system. When the apparatus is the chip system, the chip system may include a chip, or may include a chip and another discrete device.

According to an eighth aspect, a communication apparatus is provided, including a logic circuit and an interface circuit. The interface circuit is configured to: input information and/or output information. The logic circuit is configured to perform the method according to any one of the foregoing aspects, to perform processing based on the input information and/or generate the output information. The communication apparatus may be the first function node in the first aspect, or an apparatus, for example, a chip, included in the first function node; the communication apparatus may be the third function node in the second aspect, or an apparatus, for example, a chip, included in the third function node; the communication apparatus may be the second terminal device in the third aspect, or an apparatus, for example, a chip, included in the second terminal device; or the communication apparatus may be the first terminal device in the fourth aspect, or an apparatus, for example, a chip, included in the first terminal device.

According to a ninth aspect, a computer-readable storage medium is provided. The computer-readable storage medium stores a computer program or instructions. When the computer program or the instructions are executed by a processor, the method according to any one of the foregoing aspects is performed.

According to a tenth aspect, a computer program product is provided. When the computer program product is executed by a processor, the method according to any one of the foregoing aspects is performed.

It may be understood that when the communication apparatus provided in any one of the fifth aspect to the tenth aspect is a chip, the foregoing sending action/function may be understood as outputting information, and the foregoing receiving action/function may be understood as inputting information.

For technical effects achieved by any design in the fifth aspect to the tenth aspect, refer to technical effects achieved by different designs in the first aspect, the second aspect, the third aspect, or the fourth aspect. Details are not described herein again.

According to an eleventh aspect, a communication system is provided. The communication system includes at least one of the first function node according to the first aspect, the third function node according to the second aspect, the second terminal device according to the third aspect, or the first terminal device according to the fourth aspect.

### BRIEF DESCRIPTION OF DRAWINGS

FIG. 1 is a diagram of a structure of a TSN network according to this application;
FIG. 2 is a diagram of a structure of a UPF-based 5GS bridge according to this application;
FIG. 3 is a diagram of a structure of a terminal device according to this application;
FIG. 4 is a diagram of a structure of another terminal device according to this application;
FIG. 5a is a diagram of a structure of a communication apparatus according to this application;
FIG. 5b is a diagram of a structure of another communication apparatus according to this application;
FIG. 6 is a diagram of a structure of a bridge based on a PC5 connection according to this application;
FIG. 7a is a schematic flowchart of a communication method according to this application;
FIG. 7b is a diagram of a PC5 connection between terminal devices according to this application;
FIG. 8 is a schematic flowchart of another communication method according to this application;
FIG. 9 is a schematic flowchart of still another communication method according to this application;
FIG. 10 is a schematic flowchart of still another communication method according to this application;
FIG. 11 is a schematic flowchart of still another communication method according to this application; and
FIG. 12 is a diagram of a structure of still another communication apparatus according to this application.

### DESCRIPTION OF EMBODIMENTS

Unless otherwise specified, "/" in descriptions of embodiments of this application represents an "or" relationship between associated objects. For example, A/B may represent A or B. "And/or" in this application describes only an association relationship between associated objects and represents that three relationships may exist. For example, A and/or B may represent the following three cases: Only A exists, both A and B exist, and only B exists. A and B may be singular or plural.

In addition, in the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one (piece) of a, b, or c may indicate a, b, c, a and b, a and c, b and c, or a, b, and c, where a, b, and c may be singular or plural.

In addition, to clearly describe the technical solutions in embodiments of this application, the terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the word "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

It may be understood that, "embodiment" mentioned throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, an apparatus provided in embodiments of this application may also correspondingly implement these features or functions. Details are not described herein.

In this application, unless otherwise specified, for same or similar parts in embodiments, refer to each other. In various embodiments of this application, unless otherwise specified or there is a logic conflict, terms and/or descriptions between different embodiments are consistent and may be mutually referenced, and technical features in different embodiments may be combined based on an internal logical relationship thereof, to form a new embodiment. The following implementations of this application are not intended to limit the protection scope of this application.

Time-sensitive networking/network (time-sensitive networking/network, TSN) defines a time-sensitive mechanism for Ethernet data transmission, and increases determinism and reliability to a standard Ethernet.

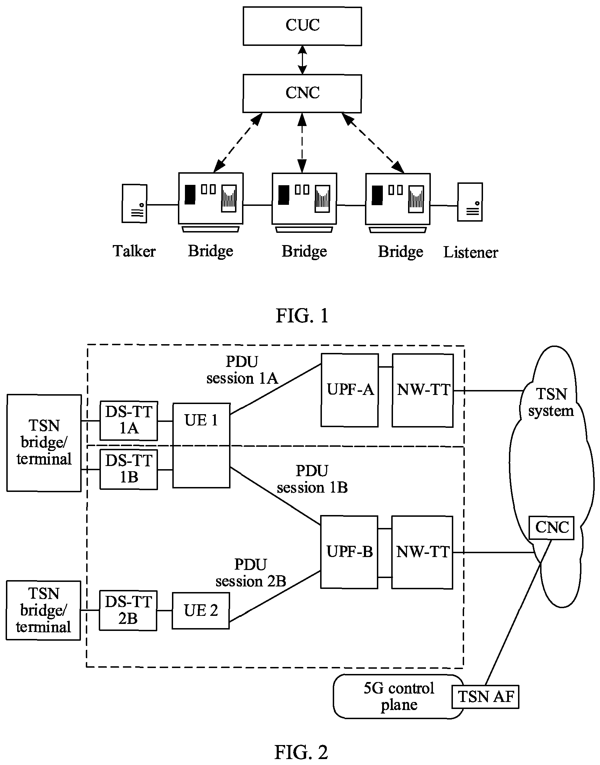

For example, a structure of centralized configuration-based TSN may be shown in FIG. 1. Refer to FIG. 1. The TSN mainly includes a talker (Talker), a listener (Listener), a bridge (Bridge), a centralized user configuration (centralized user configuration, CUC) node, and a centralized network configuration (centralized network configuration, CNC) node.

The talker (Talker) and the listener (Listener) are a sending device and a receiving device for service data. There may be a plurality of sending devices and a plurality of receiving devices in the TSN. Each sending device may send service data to the plurality of receiving devices, and each receiving device may also receive service data from the plurality of sending devices. Each sending device may support a plurality of services, and each type of service may be sent to only one receiving device, or may be sent to the plurality of receiving devices.

The bridge may also be referred to as a switch (Switch), and helps the talker to forward, to another bridge or a final listener, the service data sent by the talker. There may be a plurality of bridges in the TSN, and each bridge may be connected to a plurality of talkers, a plurality of bridges, or a plurality of listeners.

For example, one bridge may have a plurality of ingress ports (Ingress ports) and a plurality of egress ports (Egress ports). Therefore, the bridge may receive, from the plurality of talkers, data sent by the plurality of talkers, or receive, from a plurality of other bridges, data forwarded by the plurality of other bridges, and then forward the received data to the listener, or forward the received data to another bridge.

The CUC is configured to receive service information from the talker and the listener, for example, a quantity of service flows between the talker and the listener, an average throughput of each service flow, a periodicity of a periodic service, a delay requirement of the service, and a reliability requirement of the service.

The CNC is configured to perform configuration on the entire TSN. For example, the CNC may receive, from each talker, each listener, and each bridge, connection relationships between the talker, the listener, and the bridge and another device, to determine a topology of the entire network. The CNC may further receive a transmission rate, a transmission delay of each connection, and other parameters.

In addition, the CNC may further receive service information, a service requirement, and the like of each talker/listener from the CUC. Then, the CNC generates scheduling information of each service flow based on the service information and the service requirement, and sends the scheduling information to the talker/listener and the bridge, so that transmission of each service flow in the entire network can meet a transmission requirement of the service flow.

Usually, conventional TSN is deployed by using a wired Ethernet. With development of a fifth generation (fifth generation, 5G) mobile communication technology, a current 5G network has implemented support for the TSN, allowing some connections in the TSN to be wireless, thereby expanding deployment scenarios of the TSN.

For example, a 5G system (5G system, 5GS) may be integrated into the TSN in a form of TSN bridge, and the TSN bridge may be referred to as a 5GS bridge. Specifically, the 5GS may implement interworking with the TSN by using a TSN translator (TSN translator, TT). The TT may be classified into a network-side TT (network-side TT, NW-TT) and a device-side TT (device-side TT, DS-TT).

Usually, one 5GS bridge is based on one user plane function (user plane function, UPF), that is, one 5GS bridge is associated with one UPF. For example, one 5GS bridge includes an NW-TT port on a UPF side, a user plane tunnel between user equipment (user equipment, UE) and a UPF, and a DS-TT port. The NW- TT port may provide a connection between the UPF and the TSN network in the 5GS bridge; and the DS-TT port is associated with a protocol data unit (protocol data unit, PDU) session (session), and the DS-TT port may provide a connection between the UE and the TSN network in the 5GS bridge.

The UPF is an important part of a 5GS core network, and is mainly responsible for receiving user plane data of the UE and sending the user plane data to the UE in a user plane protocol stack. The user plane tunnel between the UE and the UPF may include a PDU session. After a connection is established between the UE and the UPF, at least one PDU session is established. The PDU session may be used for uplink data transmission of the UE, and may also be used for downlink data transmission.

Usually, one DS-TT port is associated with only one PDU session. PDU sessions connected to a same TSN network via a UPF are included in one 5GS bridge.

For example, as shown in FIG. 2, a 5G network includes two UPFs that can support TSN and two UE that can support the TSN. A PDU session 1A is established between a UPF-A and UE 1, a PDU session 1B is established between a UPF-B and the UE 1, and a PDU session 2B is established between the UPF-B and UE 2.

Because one 5GS bridge is associated with one UPF, the network includes two 5GS bridges. A bridge A is associated with the UPF-A, and includes an NW-TT port on a UPF-A side, a PDU session 1A between the UPF-A and the UE 1, and a DS-TT port 1A that is on a UE 1 side and that is associated with the PDU session 1A.

A bridge B is associated with the UPF-B, includes an NW-TT port on a UPF-B side, the PDU session 1B between the UPF-B and the UE 1, and a DS-TT port 1B that is on the UE 1 side and that is associated with the PDU session 1B, and further includes the PDU session 2B between the UPF-B and the UE 2, and a DS-TT port 2B that is on a UE 2 side and that is associated with the PDU session 2B.

As shown in FIG. 2, the bridge A and the bridge B may be connected to a TSN network. For example, the UE 1 may be connected to a TSN bridge (for example, a common TSN bridge) or a TSN terminal (for example, a talker/listener) via the two DS-TT ports. The UPF-A or the UPF-B may be connected to a TSN system via the NW-TT port.

In addition, to support the TSN, the 5GS core network needs to support a TSN application function (TSN application function, TSN AF). The TSN AF may be configured to provide a conversion or translation function of a control plane for integration between the 5GS and the TSN network, for example, interact with the TSN CNC. In this architecture, a core network process in the 5GS, a wireless communication process between the UE and a radio access network (radio access network, RAN), and the like remain hidden in the TSN network. That is, a related process implemented by the 5GS bridge by using the 5GS is transparent to the entire TSN network, in other words, for the TSN CNC, there is no additional difference between the 5GS bridge and another common TSN bridge.

Capabilities of the ports on the UE/DS-TT side and the UPF/NW-TT side may be integrated into a part of 5GS bridge configuration, and are reported to the TSN AF. Then, the TSN AF further sends the capabilities to the CNC, to register a 5GS bridge in the TSN network and update registration information.

For example, after UE establishes a PDU session with a UPF to support TSN communication, the UPF may allocate a DS-TT port number to a DS-TT port corresponding to the UE. The DS-TT port number is associated with the PDU session between the UE and the UPF. The UPF may further report the DS-TT port number to the TSN AF. For example, the UPF may report the DS-TT port number to the TSN AF by using a session management function (session management function, SMF) and a policy control function (policy control function, PCF). Finally, the TSN AF may report, to the CNC, information such as a port of the entire bridge.

For example, in the example shown in FIG. 2, the TSN AF may collect basic information of the bridge A and the bridge B, and report the basic information to the TSN network, for example, report the basic information to the CNC. In addition, the TSN AF may also receive configuration information from the CNC, to assist the 5GS in transmission management of TSN service data.

As described above, a currently defined 5GS bridge is based on Uu communication, and a 5GS bridge based on sidelink (sidelink, SL) communication is not supported. Consequently, a function of supporting TSN communication by the 5GS is limited, that is, the 5GS has limited support for the TSN communication. This affects deployment flexibility of the TSN network.

Based on this, this application provides a communication method, to provide a 5GS bridge based on SL communication, so that a capability of supporting TSN communication by a 5GS is improved, thereby improving deployment flexibility of a TSN network.

The technical solutions in embodiments of this application may be applied to various communication systems. The communication systems may be a 3rd generation partnership project (3rd generation partnership project, 3GPP) communication system, for example, a 5th generation (5th generation, 5G) or sixth generation (sixth generation, 6G) mobile communication system, a sidelink (sidelink, SL) system, an ultra-wideband (ultra-wideband, UWB) system, a vehicle-to-everything (vehicle-to-everything, V2X) system, a device-to-device (device-to-device, D2D) communication system, a machine-to-machine (machine-to-machine, M2M) communication system, an internet of things (internet of things, IoT), and another next-generation communication system. The communication system may alternatively be a non-3GPP communication system, for example, a wireless local area network (wireless local area network, WLAN) system like Wi-Fi. This is not limited.

The technical solutions in embodiments of this application may be applied to various communication scenarios, for example, may be applied to one or more of the following communication scenarios: a smart home, D2D, V2X, an industrial network, an IoT, or another scenario with a delay-sensitive communication requirement.

The communication systems and the communication scenarios applicable to this application are merely examples for description. The communication systems and the communication scenarios applicable to this application are not limited thereto. This is uniformly described herein. Details are not described below again.

First, an embodiment of this application provides a communication system. The communication system includes a first function node and a first bridge. The first bridge includes a proximity-based service (proximity-based service, ProSe) connection 5 (ProSe connection 5, PC5) connection between at least two terminal devices and device-side translator ports of the at least two terminal devices. For example, in this application, an example in which the at least two terminal devices include a first terminal device and a second terminal device is used for description.

Optionally, a bridge type of the first bridge may be an SL bridge. In this application, the SL bridge may also be referred to as a PC5 bridge or a ProSe bridge. A name of the bridge including the PC5 connection between the at least two terminal devices and the device-side translator ports of the at least two terminal devices is not limited in this embodiment of this application. The first bridge may provide a data forwarding service for a first network. For example, the first network may be an Ethernet, for example, TSN. Certainly, the first network may alternatively be another Ethernet that has a delay-sensitive communication requirement. This is not specifically limited in this application. Specific implementation of the first bridge is described in subsequent embodiments, and details are not described herein.

Optionally, the first function node may provide a conversion function of a control plane (which may be briefly referred to as a control plane conversion function) for integration between a mobile communication system (for example, a 5GS) and the first network. The conversion function of the control plane may also be understood as a translation function or an interaction function of the control plane. The providing the conversion function of the control plane for the integration between the mobile communication system and the first network may include: The first function node may report information about the PC5 bridge to the first network, and the first function node receives configuration information of the PC5 bridge and the like from the first network. The configuration information of the PC5 bridge may include scheduling information of the PC5 bridge and the like.

For example, when the first network is the TSN, the first function node may interact with TSN CNC, for example, report the information about the PC5 bridge to the TSN CNC, and receive the configuration information of the PC5 bridge from the TSN CNC.

Optionally, the first function node may further provide a node management function (which may be briefly referred to as a node management function) for at least one PC5 bridge (or referred to as an SL bridge or a ProSe bridge). The node management function includes at least one of the following: determining an identifier of a PC5 bridge, allocating port numbers to device-side translator ports, determining a structure of the bridge (for example, determining which device-side translator ports are associated with each other), and the like. The PC5 bridge includes a PC5 connection between at least two terminal devices and device-side translator ports of the at least two terminal devices. Specific implementation of the PC5 bridge is described in subsequent embodiments, and details are not described herein.

Optionally, a function of the first function node may also be referred to as an AF function or a TSN AF function. That is, the AF function or the TSN AF function may include the control plane conversion function. Optionally, the AF function or the TSN AF function may further include the node management function.

Optionally, the first function node may be deployed in a core network, that is, the first function node may be a core network element, a core network function, a core network node, or the like. For example, a network element or an entity is deployed in the core network to implement the function of the first function node. For example, the first function node may be an application function (application function, AF) network element, for example, a TSN AF network element in the foregoing 5GS. For another example, the first function node may be deployed on a policy control function (policy control function, PCF) network element. In this case, it may be considered that the PCF network element has the function of the first function node, or it may be considered that the first function node is the PCF network element.

Alternatively, the first function node may be deployed on the first terminal device. In this case, it may be considered that the first terminal device has the function of the first function node. For example, the first terminal device may provide the conversion function of the control plane for the integration between the mobile communication system and the first network. In addition, the first terminal device may further provide the node management function for the at least one PC5 bridge. That is, the first terminal device has the AF function or the TSN AF function.

Optionally, the communication system further includes a second function node and/or a third function node.

Optionally, the second function node may be a configuration (or control) node in the first network, and is configured to configure the first network. For example, when the first network is the TSN, the second function node may be a CNC network element/node in the TSN.

Optionally, the third function node may have a node management function. The third function node may be deployed in a core network, that is, the third function node may be a core network element, a core network function, a core network node, or the like. For example, the third function node may be a PCF network element, or the third function node may be deployed on the PCF network element. In this case, it may be considered that the PCF network element has the node management function. Alternatively, the third function node may be deployed on the first terminal device. In this case, it may be considered that the first terminal device has the node management function. For example, the first terminal device may provide the node management function for the at least one PC5 bridge.

Optionally, the terminal device may have a device-side translator. The device-side translator may provide an ingress port and/or an egress port (referred to as a device-side translator port) for a bridge when the mobile communication system (for example, the 5GS) serves as the bridge of the first network, or the device-side translator is configured to perform an operation related to the device-side translator port. For example, when the first network is the TSN, the device-side translator may be a DS-TT, and a port provided by the device-side translator is a DS-TT port.

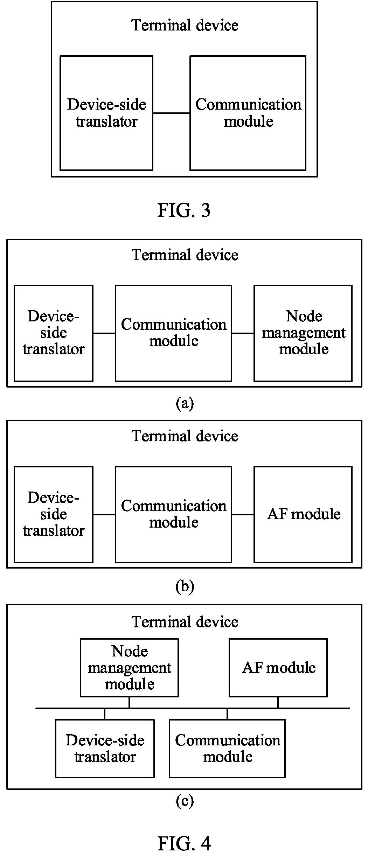

With reference to the foregoing descriptions of the terminal device, the terminal device in embodiments of this application may have the following four structures. (1). As shown in FIG. 3, the terminal device may include a communication module and a device-side translator. (2) As shown in (a) in FIG. 4, the terminal device may include a communication module, a device-side translator, and a node management module. (3) As shown in (b) in FIG. 4, the terminal device may include a communication module, a device-side translator, and an AF module. (4) As shown in (c) in FIG. 4, the terminal device may include a communication module, a device-side translator, a node management module, and an AF module.

Optionally, the communication module may be used for communication (for example, Uu communication and SL communication) inside a mobile communication system, and may be UE or a mobile communication module in a mobile communication system (for example, 5GS or 4G) standard. It should be understood that the communication module may be further used for direct communication between UE, for example, SL communication, PC5 communication, or proximity-based service (proximity-based service, ProSe) communication. The device-side translator may implement interworking between the communication module and the external first network.

Optionally, the node management module is configured to implement the node management function.

Optionally, the AF module is configured to implement the AF function or the TSN AF function. That is, the AF module may provide the conversion function of the control plane for the integration between the mobile communication system and the first network.

Optionally, the AF module may further provide the node management function for the at least one PC5 bridge.

For example, when the AF function includes the control plane conversion function and the node management function, it may be considered that the AF module integrates the node management function and the control plane conversion function. In this case, a structure of a terminal device may be shown in FIG. 3, (a) in FIG. 4, or (b) in FIG. 4. When the structure of the terminal device is shown in FIG. 3, the terminal device does not have the AF function (including the control plane conversion function and the node management function); when the structure of the terminal device is shown in (a) in FIG. 4, the terminal device has the node management function (implemented by the node management module), and does not have the control plane conversion function; or when the structure of the terminal device is shown in (b) in FIG. 4, the terminal device has the AF function (including the control plane conversion function and the node management function, which are implemented by the AF module).

For example, when the AF function includes the control plane conversion function but does not include the node management function, it may be considered that the AF module integrates the control plane conversion function but does not integrate the node management function. In this case, a structure of a terminal device may be shown in FIG. 3, (a) in FIG. 4, (b) in FIG. 4, or (c) in FIG. 4. When the structure of the terminal device is shown in FIG. 3, the terminal device does not have the control plane conversion function and the node management function; when the structure of the terminal device is shown in (a) in FIG. 4, the terminal device has the node management function (implemented by the node management module), and does not have the control plane conversion function; when the structure of the terminal device is shown in (b) in FIG. 4, the terminal device has the AF function (including the control plane conversion function, which is implemented by the AF module), and does not have the node management function; or when the structure of the terminal device is shown in (c) in FIG. 4, the terminal device has the AF function (including the control plane conversion function, which is implemented by the AF module) and the node management function (implemented by the node management module).

Optionally, a plurality of modules of the terminal device shown in FIG. 3 or FIG. 4 may be integrated together. Alternatively, a plurality of modules may be independently deployed. That is, one terminal device may include a plurality of distributed modules or components. For example, the device-side translator may be used as an external device of the UE to communicate with the UE through an interface. This is not specifically limited in this application.

Optionally, in a possible product implementation, the terminal device may be, for example, a wireless terminal in an IoT network, a V2X network, a D2D network, an M2M network, a 5G network, or a future evolved public land mobile network (public land mobile network, PLMN). The terminal device may be deployed on land, including an indoor device, an outdoor device, a handheld device, or a vehicle-mounted device, may be deployed on a water surface (for example, on a ship), or may be deployed in the air (for example, on aircraft, a balloon, or a satellite).

For example, the terminal device may be a narrow-band terminal, an unmanned aerial vehicle, an IoT device (for example, a sensor, an electricity meter, or a water meter), a V2X device, a station (station, ST) in a WLAN, a cellular phone, a cordless phone, a session initiation protocol (session initiation protocol, SIP) phone, a wireless local loop (wireless local loop, WLL) station, a personal digital assistant (personal digital assistant, PDA) device, a handheld device with a wireless communication function, a computing device or another processing device connected to a wireless modem, a vehicle-mounted device, a wearable device (which may also be referred to as a wearable intelligent device), a tablet computer, a computer with a wireless transceiver function, a virtual reality (virtual reality, VR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle with a vehicle-to-vehicle (vehicle-to-vehicle, V2V) communication capability, an intelligent connected vehicle, or an unmanned aerial vehicle with an uncrewed aerial vehicle to uncrewed aerial vehicle (UAV to UAV, U2U) communication capability, or the like. The terminal device may be mobile, or may be fixed. This is not specifically limited in this application.

The related function of the first function node, the second function node, the third function node, or the terminal device in this application may be implemented by one device, may be jointly implemented by a plurality of devices, may be implemented by one or more functional modules in one device, may be implemented by one or more chips, or may be implemented by a system on chip (system on chip, SoC) or a chip system. The chip system may include a chip, or may include a chip and another discrete device. This is not specifically limited in this embodiment of this application.

It may be understood that the foregoing function may be a network element in a hardware device, a software function running on special-purpose hardware, a combination of hardware and software, or a virtualization function instantiated on a platform (for example, a cloud platform).

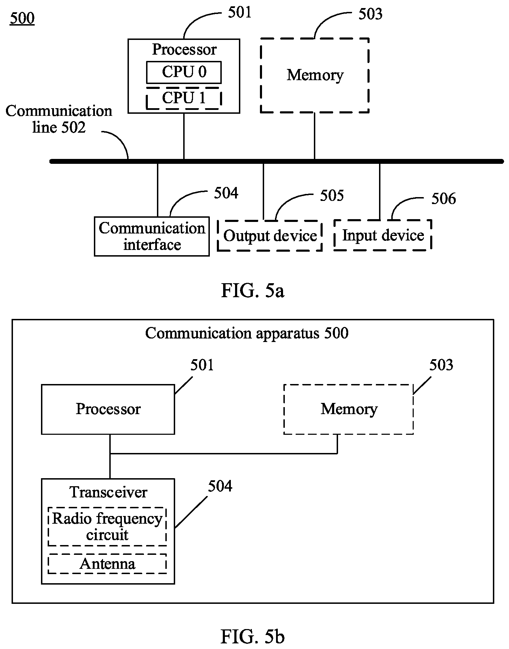

For example, the related function of the first function node, the second function node, the third function node, or the terminal device in this application may be implemented by using a communication apparatus 500 in FIG. 5a. FIG. 5a is a diagram of a structure of a communication apparatus 500 according to an embodiment of this application. The communication apparatus 500 includes one or more processors 501 and at least one communication interface 504 (in FIG. 5a, an example in which a communication interface 504 and one processor 501 are included is merely used for description). Optionally, a communication line 502 and a memory 503 may be further included.

The processor 501 may be a general-purpose central processing unit (central processing unit, CPU), a microprocessor, an application-specific integrated circuit (application-specific integrated circuit, ASIC), or one or more integrated circuits configured to control execution of programs in the solutions in this application.

In specific implementation, in an embodiment, the processor 501 may include one or more CPUs, for example, a CPU 0 and a CPU 1 in FIG. 5a.

In specific implementation, in an embodiment, the processor 501 may be a single-core (single-core) processor, or may be a multi-core (multi-core) processor. The processor herein may include but is not limited to at least one of the following: various computing devices that run software, such as a central processing unit (central processing unit, CPU), a microprocessor, a digital signal processor (DSP), a microcontroller unit (microcontroller unit, MCU), or an artificial intelligence processor. Each type of computing device may include one or more cores for executing software instructions to perform operation or processing.

The communication line 502 may be used for communication between different components included in the communication apparatus 500.

The communication interface 504 may be configured to communicate with another device or communication network. The communication interface 504 may be an apparatus like a transceiver or a transceiver device, or may be an input/output interface. Alternatively, the communication interface 504 may be a transceiver circuit located in the processor 501, and is configured to implement signal input and signal output of the processor.

The memory 503 may be an apparatus with a storage function. The memory may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can be configured to: carry or store expected program code in a form of instructions or a data structure and that can be accessed by a computer. However, this is not limited thereto. The memory may exist independently, and is connected to the processor through the communication line 502. The memory may alternatively be integrated with the processor.

Optionally, the memory 503 may be configured to store computer-executable instructions for executing the solutions in this application, and the processor 501 controls the execution, to implement the methods provided in embodiments of this application.

Alternatively, optionally, in this embodiment of this application, the processor 501 may perform a processing-related function in the methods provided in the following embodiments of this application, and the communication interface 504 is responsible for a function of communicating with another device or communication network in the methods provided in the following embodiments of this application. This is not specifically limited in this embodiment of this application.

Optionally, the computer-executable instructions in this embodiment of this application may also be referred to as application program code. This is not specifically limited in this embodiment of this application.

In specific implementation, in an embodiment, the communication apparatus 500 may further include an output device 505 and an input device 506. The output device 505 communicates with the processor 501, and may display information in a plurality of manners. For example, the output device 505 may be a liquid crystal display (liquid crystal display, LCD), a light emitting diode (light emitting diode, LED) display device, a cathode ray tube (cathode ray tube, CRT) display device, or a projector (projector). The input device 506 communicates with the processor 501, and may receive an input of a user in a plurality of manners. For example, the input device 506 may be a mouse, a keyboard, a touchscreen device, or a sensing device.

An example in which the communication interface 504 is the transceiver is used. FIG. 5b is a diagram of a structure of another communication apparatus 500 according to an embodiment of this application. The communication apparatus 500 includes a processor 501 and a transceiver 504. FIG. 5b shows only main components of the communication apparatus 500. In addition to the processor 501 and the transceiver 504, the communication apparatus may further include a memory 503 and an input/output apparatus (not shown in the figure).

The processor 501 is mainly configured to process: a communication protocol and communication data, control the entire communication apparatus, execute a software program, and process data of the software program. The memory 503 is mainly configured to store the software program and the data. The transceiver 504 may include a radio frequency circuit and an antenna. The radio frequency circuit is mainly configured to: perform conversion between a baseband signal and a radio frequency signal and process the radio frequency signal. The antenna is mainly configured to: receive and send a radio frequency signal in a form of an electromagnetic wave.

After the communication apparatus is powered on, the processor 501 may read the software program in the memory 503, interpret and execute instructions of the software program, and process the data of the software program. When data needs to be sent in a wireless manner, the processor 501 performs baseband processing on the to-be-sent data, and then outputs a baseband signal to the radio frequency circuit. The radio frequency circuit performs radio frequency processing on the baseband signal, and then sends a radio frequency signal in an electromagnetic wave form by using the antenna. When data is sent to the communication apparatus, the radio frequency circuit receives a radio frequency signal by using the antenna, converts the radio frequency signal into a baseband signal, and outputs the baseband signal to the processor 501. The processor 501 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It should be noted that a composition structure shown in FIG. 5a or FIG. 5b does not constitute a limitation on the communication apparatus. In addition to the components shown in FIG. 5a or FIG. 5b, the communication apparatus may include more or fewer components than those shown in the figure, or some components may be combined, or different component arrangements may be used. The components shown in the figure may be implemented by hardware, software, or a combination of software and hardware.

The following describes the methods provided in this application in detail with reference to the accompanying drawings. In embodiments of this application, each function node may perform some or all of steps in embodiments of this application. These steps or operations are merely examples. Other operations or variations of various operations may alternatively be performed in embodiments of this application. In addition, the steps may be performed in a sequence different from a sequence presented in embodiments of this application, and not all the operations in embodiments of this application may be necessarily to be performed.

For example, the communication methods provided in this application may be applied to a mobile communication system or a scenario in which the mobile communication system is used as a bridge of a first network. Certainly, the methods may be further applied to various scenarios in which another mobile communication system or a mobile communication system is integrated (or combined) with another network. An application scenario of the communication methods is not specifically limited in this application. The foregoing example application scenario does not constitute any limitation on the solutions in this application.

A bridge (referred to as a PC5 bridge, an SL bridge, or a ProSe bridge) is provided in the communication methods in this application. The following first describes the PC5 bridge provided in this application.

The PC5 bridge includes a PC5 connection between at least two terminal devices and device-side translator ports (for example, DS-TT ports) of the at least two terminal devices.

Optionally, in embodiments of this application, the PC5 connection may also be understood as a layer 2 link (Layer 2 Link), an SL connection, a D2D connection, a ProSe connection, or the like.

Optionally, the device-side translator port of the terminal device may also be referred to as a translator port on a terminal device side, or a device-side translator port on the terminal device side. For example, the DS-TT port of the terminal device may also be referred to as a DS-TT port on a terminal device side.

Optionally, the PC5 bridge may be used as a bridge in a first network. The first network may be an Ethernet, for example, TSN or another type of Ethernet. The PC5 bridge may communicate with another bridge in the first network, a talker in the first network, or a listener in the first network.

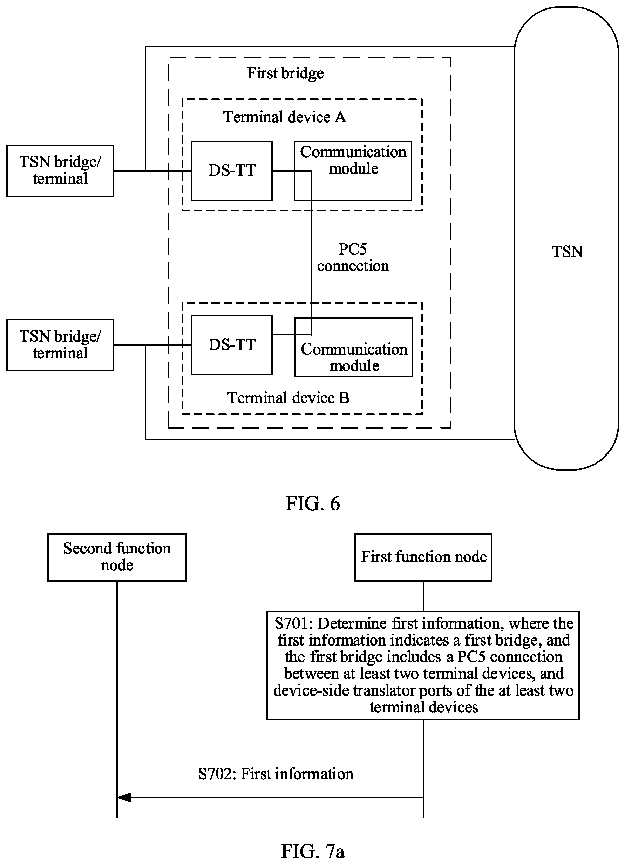

For example, the first network is the TSN. As shown in FIG. 6, it is assumed that there is a PC5 connection between a terminal device A and a terminal device B, and the terminal device A and the terminal device B have DS-TT ports. In this case, the PC5 bridge may include the PC5 connection between the terminal device A and the terminal device B, and the DS-TT ports of the terminal device A and the terminal device B. In addition, as shown in FIG. 6, the PC5 bridge may be connected to a TSN terminal (for example, a talker or a listener) in the TSN or another TSN bridge in the TSN.

It may be understood that FIG. 6 shows only related nodes and connections in a data transmission process associated with the PC5 bridge. In addition, in actual implementation, there may be further a node (for example, an AF or a PCF) and a connection (not shown in FIG. 6) that are related to a process such as bridge configuration.

Optionally, the PC5 bridge may include only a PC5 connection between two terminal devices and device-side translator ports of the two terminal devices. Alternatively, the PC5 bridge may include PC5 connections between three or more terminal devices and device-side translator ports of these terminal devices.

For example, the PC5 bridge may include mutual PC5 connections between a plurality of terminal devices that are configured in a same resource pool and that support the first network, and device-side translator ports of these terminal devices. Alternatively, the PC5 bridge may include mutual PC5 connections between several terminal devices in TSN, and device-side translator ports of these terminal devices. Alternatively, the PC5 bridge may include several terminal devices that support a TSN application, and device-side translator ports of these terminal devices.

Optionally, the PC5 connection between the terminal devices may be a unicast connection, a multicast connection, or a broadcast connection. In embodiments of this application, the unicast connection is used as an example for description.

Optionally, on a unicast PC5 connection between two terminal devices, each of the two terminal devices has a layer 2 identifier (identifier, ID) identifying an identity of the terminal device. In addition, a plurality of PC5 connections may be maintained (or established) between two terminal devices, and different PC5 connections may correspond to different services and the like. Each terminal device may have different layer 2 identifiers on different PC5 connections.

Optionally, when a terminal device has a plurality of PC5 connections, the plurality of PC5 connections of the terminal device may correspond to one device-side translator port on a terminal device side. That is, a plurality of layer 2 identifiers (in one-to-one correspondence with the plurality of PC5 connections) of the terminal device may correspond to one device-side translator port.

Alternatively, the plurality of PC5 connections of the terminal device may respectively correspond to different device-side translator ports on a terminal device side. That is, a plurality of layer 2 identifiers (in one-to-one correspondence with the plurality of PC5 connections) of the terminal device may respectively correspond to different device-side translator ports.

For example, an example in which there is a PC5 connection #1 between a terminal device 1 and a terminal device 2, and there is a PC5 connection #2 between the terminal device 1 and a terminal device 3 is used. In this case, the terminal device 1 has two PC5 connections, namely, the PC5 connection #1 and the PC5 connection #2. Both the PC5 connection #1 and the PC5 connection #2 may correspond to a device-side translator port #1 of the terminal device 1; or the PC5 connection #1 and the PC5 connection #2 may respectively correspond to a device-side translator port #1 and a device-side translator port #2 of the terminal device 1.

The following describes the communication methods provided in this application. FIG. 7a is a schematic flowchart of a communication method according to this application. The method includes the following steps.

S701: A first function node determines first information.

The first information indicates a first bridge, or the first information is information about the first bridge. For example, the first bridge may be a bridge in a first network. For descriptions of the first network, refer to the foregoing related descriptions. Details are not described herein again.

The first bridge includes a PC5 connection between at least two terminal devices and device-side translator ports of the at least two terminal devices. For another implementation of the first bridge, refer to the foregoing descriptions of the PC5 bridge. Details are not described herein again.

For example, the PC5 connection between the at least two terminal devices may indicate that each of the at least two terminal devices has a PC5 connection to at least another terminal device. For example, the at least two terminal devices include a terminal device 1, a terminal device 2, and a terminal device 3. The PC5 connection between the at least two terminal devices may include at least one of the following: a PC5 connection between the terminal device 1 and the terminal device 2, a PC5 connection between the terminal device 1 and the terminal device 3, and a PC5 connection between the terminal device 2 and the terminal device 3.

The first information includes at least one of an identifier of the first bridge, a quantity of ports in the first bridge, port numbers of the device-side translator ports of the at least two terminal devices, or port pair (port pair) information. For example, the quantity of ports in the first bridge may be a quantity of ports of the device-side translator ports in the first bridge.

Optionally, one port pair includes two device-side translator ports associated with one PC5 connection. For example, a first device-side translator port and a second device-side translator port that are associated with a first PC5 connection may form a port pair. The port pair information indicates a port pair.

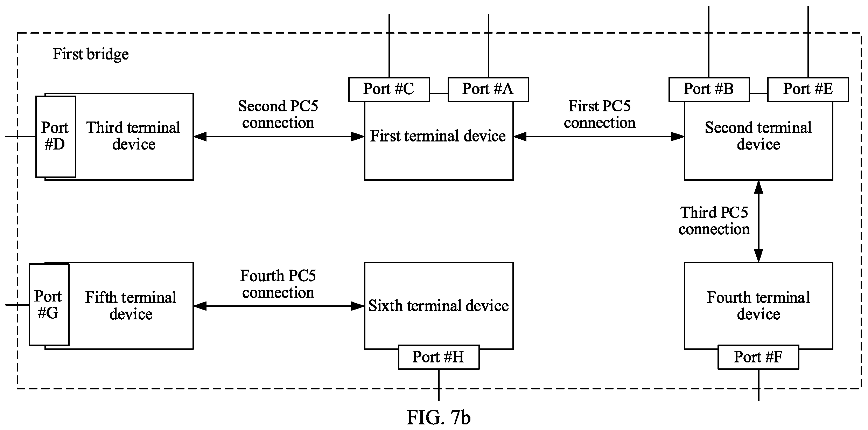

For example, a first terminal device, a second terminal device, a third terminal device, a fourth terminal device, a fifth terminal device, and a sixth terminal device are used as examples. As shown in FIG. 7b, assuming that a first PC5 connection (associated with a device-side translator port #A and a device-side translator port #B) is established between the first terminal device and the second terminal device, a second PC5 connection (associated with a device-side translator port #C and a device-side translator port #D) is established between the first terminal device and the third terminal device, a third PC5 connection (associated with a device-side translator port #E and a device-side translator port #F) is established between the second terminal device and the fourth terminal device, and a fourth PC5 connection (associated with a device-side translator port #G and a device-side translator port #H) is established between the fifth terminal device and the sixth terminal device, a first bridge may include the four PC5 connections between the six terminal devices and port numbers of the device-side translator ports associated with the PC5 connections. The port pair information in the first information may indicate that the device-side translator port #A and the device-side translator port #B are a port pair, the device-side translator port #C and the device-side translator port #D are a port pair, and the device-side translator port #E and the device-side translator port #F are a port pair, and the device-side translator port #G and the device-side translator port #H are a port pair.

It should be noted that, in FIG. 7b and the following embodiments, a device-side translator port #X is briefly referred to as a port #X, where X may be A, B, C, D, E, F, G or H.

For example, the port #C and the port #A of the first terminal device in FIG. 7b may be a same device-side translator port, or may be different device-side translator ports. For example, when layer 2 identifiers used by the first terminal device on the first PC5 connection and the second PC5 connection is a same layer 2 identifier, the port #C and the port #A are a same device-side translator port; or when layer 2 identifiers used by the first terminal device on the first PC5 connection and the second PC5 connection are different layer 2 identifiers, the port #C and the port #A are different device-side translator ports. Similarly, the port #B and the port #E of the second terminal device may be a same device-side translator port, or may be different device-side translator ports.

Optionally, for each port pair, the first information may further include transmission delay information on the port pair. Further, the first information may further include transmission delay information on the port pair for different service types.

Which ports in the first bridge can be used to transmit data may be determined based on the port pair information, so that a configuration (or control) node (for example, TSN CNC) in the first bridge determines a data transmission path.

Optionally, the first function node may be deployed in a core network. For example, the first function node may be an AF network element (for example, a TSN AF network element) or a PCF network element; or the first function node may be deployed on the first terminal device. Reference may be made to the related descriptions of the communication system. Details are not described herein again.

S702: The first function node sends the first information to a second function node. Correspondingly, the second function node receives the first information from the first function node.

For example, the second function node may be a configuration (or control) node in the first network. For example, when the first network is TSN, the second function node may be a CNC network element in the TSN.

Optionally, after receiving the first information, the second function node may learn of a structure of the first bridge based on the first information. Therefore, that the first function node sends the first information to a second function node may also be understood as that the first function node registers or updates the first bridge with the second function node. Subsequently, the second function node may perform an operation such as configuration on the first bridge.

Based on this solution, in this application, the PC5 connection between the terminal devices is used as an implementation of the bridge, so that integration between a mobile communication system (for example, a 5GS) and another network (for example, a TSN network) can be supported by using the PC5 connection, thereby improving a capability of the mobile communication system to support the another network, and improving deployment flexibility of the network.

The following describes in detail the communication method shown in FIG. 7a by using an example in which the at least two terminal devices include the first terminal device and the second terminal device.

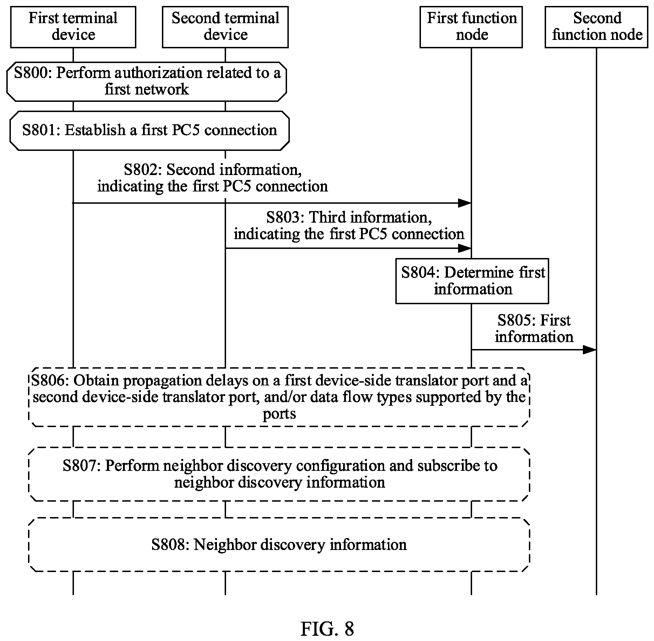

When the first function node is deployed in the core network, a communication method shown in FIG. 8 may be used as an implementation of the method shown in FIG. 7a. In this case, it may be considered that the first function node may provide a conversion function of a control plane for integration between the mobile communication system and the first network, and may provide a node management function for at least one PC5 bridge. For example, the first function node may be the AF network element (for example, the TSN AF network element) or the PCF network element. In addition, in this case, structures of the first terminal device and the second terminal device may be shown in FIG. 3.

Refer to FIG. 8. The communication method includes the following steps.

S800: Perform authorization related to a first network (for example, a TSN network) for a first terminal device and a second terminal device.

Optionally, in step S800, the first terminal device and the second terminal device may determine basic parameters used to support a PC5 bridge, for example, a mapping relationship between a service type and a destination identifier (destination ID), and an internet protocol (internet protocol, IP) address of a first function node, a medium access control (media access control, MAC) address (address) of the first function node, and a used frequency band. For example, the destination identifier is essentially a layer 2 identifier, and the service type and the destination identifier are used to subsequently establish a PC5 connection.

Optionally, the basic parameters used to support the PC5 bridge may be provided by the terminal device. That is, these parameters may be configured when the terminal device is delivered from a factory, for example, is configured by using a universal integrated circuit card (universal integrated circuit card, UICC). Alternatively, the basic parameters used to support the PC5 bridge may be configured by the network, for example, the PCF. Alternatively, the basic parameters used to support the PC5 bridge may be determined in another manner. This is not specifically limited in this application.

S801: Establish a first PC5 connection between the first terminal device and the second terminal device.

That is, the first terminal device establishes the first PC5 connection to the second terminal device. The second terminal device establishes the first PC5 connection to the first terminal device.

Optionally, the first terminal device may send a direct communication request to the second terminal device. After a secure connection is established between the first terminal device and the second terminal device, the second terminal device may send a direct communication accept message to the first terminal device. In this case, it may be considered that the first PC5 connection between the first terminal device and the second terminal device is successfully established. Based on the first PC5 connection, data may be sent and received between the first terminal device and the second terminal device.

Optionally, on the first PC5 connection, both the first terminal device and the second terminal device each have one layer 2 identifier. For ease of description, in the following embodiments of this application, the identifier of the first terminal device on the first PC5 connection is referred to as a first layer 2 identifier, and the identifier of the second terminal device on the first PC5 connection is referred to as a second layer 2 identifier.

Optionally, when the first terminal device and the second terminal device communicate with each other through the first PC5 connection, and the first terminal device sends information to the second terminal device, a source identifier (Source ID) in the information is the first layer 2 identifier, and a destination identifier (Destination ID) in the information is the second layer 2 identifier. When the second terminal device sends information to the first terminal device, a source identifier (Source ID) in the information is the second layer 2 identifier, and a destination identifier (Destination ID) in the information is the first layer 2 identifier.

Optionally, the first PC5 connection may correspond to (or be associated with) a device-side translator port of the first terminal device and a device-side translator port of the second terminal device. For ease of description, in the following embodiments of this application, the device-side translator port that is of the first terminal device and that is associated with the first PC5 connection is referred to as a first device-side translator port, and the device-side translator port that is of the second terminal device and that is associated with the first PC5 connection is referred to as a second device-side translator port.

Optionally, the identifier of the terminal device on the PC5 connection may correspond to the device-side translator port associated with the PC5 connection. For example, the first layer 2 identifier corresponds to the first device-side translator port, and the second layer 2 identifier corresponds to the second device-side translator port.

Optionally, the first device-side translator port and the second device-side translator port each correspond to one MAC address. A MAC address corresponding to each device-side translator port may be a globally unique MAC address, that is, different device-side translator ports correspond to different MAC addresses. Therefore, it may also be considered that the first layer 2 identifier is associated with a MAC address of the first device-side translator port, and the second layer 2 identifier is associated with a MAC address of the second device-side translator port.

Optionally, after the first PC5 connection is established, the first terminal device and the second terminal device may determine an identifier (namely, a PC5 link ID) of the first PC5 connection. The PC5 link ID identifies the first PC5 connection.

Optionally, after step S801, the first terminal device and the second terminal device may determine information about the first PC5 connection (PC5 Link profile). For example, the information about the first PC5 connection may include the source identifier, the destination identifier, the identifier of the first PC5 connection, and the like. The information about the first PC5 connection may be used to determine a first bridge.

Optionally, in addition to the first PC5 connection, at least one PC5 connection may be further established between the first terminal device and the second terminal device. That is, a plurality of PC5 connections may be established between the first terminal device and the second terminal device. In addition, in addition to the second terminal device, the first terminal device may further establish a PC5 connection to another terminal device (for example, at least one third terminal device). In addition to the first terminal device, the second terminal device may further establish a PC5 connection to another terminal device (for example, at least one fourth terminal device).

Optionally, the first terminal device has a same layer 2 identifier or different layer 2 identifiers on a plurality of PC5 connections. The plurality of PC5 connections may include a PC5 connection between the first terminal device and another terminal device, and/or PC5 connections between the first terminal device and a plurality of terminal devices.

Optionally, the first terminal device may associate a plurality of device-side translator ports of the first terminal device with a plurality of PC5 connections of the first terminal device (different PC5 connections are associated with different device-side translator ports), and the plurality of device-side translator ports may have different MAC addresses. Alternatively, the first terminal device may alternatively associate some or all of a plurality of PC5 connections with a same device-side translator port (that is, different PC5 connections are associated with the same device-side translator port). For example, when the first terminal device has a same layer 2 identifier on a plurality of PC5 connections, these PC5 connections may share a device-side translator port of the first terminal device. When the first terminal device has different layer 2 identifiers on a plurality of PC5 connections, these PC5 connections need to be associated with different device-side translator ports of the first terminal device.

Optionally, a PC5 connection may alternatively be established between terminal devices other than the first terminal device and the second terminal device (for example, between a fifth terminal device and a sixth terminal device). For implementation of these PC5 connections, refer to the related descriptions of the first PC5 connection. Details are not described herein again.

S802: The first terminal device sends second information to the first function node. Correspondingly, the first function node receives the second information from the first terminal device.

The second information indicates the first PC5 connection. For example, the second information is determined based on the information about the first PC5 connection.

Optionally, the second information includes the first layer 2 identifier, the second layer 2 identifier, and/or the identifier of the first PC5 connection. When the second information includes the first layer 2 identifier and the second layer 2 identifier, it may also be understood that the first information includes the source identifier and the destination identifier on a first terminal device side.

Further, the second information may further include at least one of the following four items.

### (1) First identifier information.

Optionally, the first identifier information may be used as a unique identifier of the first device-side translator port. For example, when another terminal device (denoted as a seventh terminal device) and the first terminal device select a same layer 2 identifier, the first function node may identify, based on the first identifier information, whether device-side translator ports of the two terminal devices are the same.

For example, if the second information does not include the first identifier information, because the layer 2 identifier of the seventh terminal device is the same as that of the first terminal device, the first function node may consider that the device-side translator ports of the seventh terminal device and the first terminal device are the same. When the second information includes the first identifier information, and related information that is of a PC5 connection and that is sent by the seventh terminal device to the first function node includes third identifier information (used as a unique identifier of the device-side translator port of the seventh terminal device), the first function node may identify, based on the first identifier information and the third identifier information, whether the device-side translator ports of the two terminal devices are the same.

For example, the first identifier information may include at least one of the following: the MAC address corresponding to the first device-side translator port, an international mobile subscriber identity (international mobile subscriber identity, IMSI) of the first terminal device, a temporary mobile subscriber identity (temporary mobile subscriber identity, TMSI) of the first terminal device, or an international mobile equipment identity (international mobile equipment identity, IMEI) of the first terminal device.

### (2) Device-side translator port management capability information of the first terminal device.

Optionally, the device-side translator port management capability information may include a traffic class table supported by a device-side translator, and the like. Alternatively, the device-side translator port management capability information may indicate port management information supported by a device-side translator port of the first terminal device. The port management information may include, for example, whether per-stream filtering and policing (Per-stream filtering policy, PSFP) in the first network (for example, the TSN network) is supported. For detailed descriptions of the port management capability information, refer to the 3GPP technical standard (technology standard, TS) 23.501 protocol.

### (3) Residence time corresponding to the first device-side translator port.

Optionally, the residence time corresponding to the first device-side translator port may be understood as duration for which a data packet arrives at a communication module of the first terminal device from the device-side translator port of the first terminal device (for example, duration from a moment at which the data packet is output from the device-side translator port to a moment at which the data packet arrives at the communication module), or duration for which the data packet arrives at the device-side translator port of the first terminal device from the communication module of the first terminal device (for example, duration between a moment at which the data packet is output from the communication module and a moment at which the data packet arrives at the device-side translator port).

For example, when the first network is the TSN, the residence time corresponding to the first terminal device may be UE-DS-TT residence time (UE-DS-TT residence time), indicating duration for which a data packet arrives at a UE module (that is, the communication module of the first terminal device) from a DS-TT.

### (4) First application information.

Optionally, the first application information includes at least one of the following: an application identifier (Application ID) associated with the first PC5 connection, an application group identifier (Application group ID) associated with the first PC5 connection, an application layer identifier (Application Layer ID) associated with the first PC5 connection, or an identifier of a network served by the first terminal device.

For example, the application layer identifier is an identifier of a terminal device at an application layer, and identifies the terminal device. That is, the application layer identifier associated with the first PC5 connection is an identifier of the first terminal device at an application layer, and identifies the first terminal device.

The application identifier is an identifier of an application, and identifies the application. That is, the application identifier associated with the first PC5 connection may identify an application associated with (or corresponding to or serving) the first PC5 connection. Similarly, the application group identifier associated with the first PC5 connection may identify an application group associated with (or corresponding to or serving) the first PC5 connection.

Optionally, there may be a plurality of networks. For example, there is a second network or a third network in addition to the first network. The identifier of the network served by the first terminal device may also be understood as an identifier of the first network, that is, it indicates that the first terminal device may be configured to serve the first network, is interested in the first network, or may provide a transmission service for the first network.

Optionally, there may be a plurality of applications in the first network, and the first application information reported by the first terminal device may identify an application served by or an application of interest to the first terminal device in the plurality of applications.

### (5) Second identifier information.

Optionally, the second identifier information may be used as a unique identifier of the second device-side translator port. For example, the second identifier information may include at least one of the following: the MAC address corresponding to the second device-side translator port, an IMSI of the second terminal device, a TMSI of the second terminal device, or an IMEI of the second terminal device.

Optionally, the first terminal device and the second terminal device may exchange the first identifier information and/or the second identifier information in a process of establishing the first PC5 connection or after the first PC5 connection is established.

Optionally, when the second information reported by the first terminal device includes the MAC address of the first device-side translator port of the first terminal device and the MAC address of the second device-side translator port of the second terminal device, the first terminal device may not report the first layer 2 identifier and the second layer 2 identifier, or may not report the identifier of the first PC5 connection.

Optionally, the first terminal device may send the second information to the first function node in the following two manners.

Manner 1: The first terminal device sends the second information to the first function node through a user plane connection.

Optionally, the first terminal device may send the second information to the first function node according to an IP protocol or an Ethernet protocol. In this case, the IP address or the MAC address of the first function node needs to be used.

For example, the first terminal device may send the second information to the first function node through a connection between the first terminal device and an access network device. For example, the first terminal device may establish a connection (for example, a PDU session) to a UPF network element via the access network device, and send the second information to the UPF network element through the connection. Then, the UPF network element sends the second information to the first function node according to the IP protocol (where the IP address of the first function node needs to be used) or the Ethernet protocol (where the MAC address of the first function node needs to be used).

Manner 2: The first terminal device sends the second information to the first function node through a control plane connection.

Optionally, the first terminal device may encapsulate the second information into an N1 container (container), and send the N1 container to a PCF network element. When the first function node is not the PCF network element, the PCF network element sends the second information to the first function node. When the first function node is the PCF network element, after the PCF network element receives the N1 container, the PCF network element may parse the second information in the N1 container, and does not forward the second information.

For example, the first terminal device may establish a connection to the PCF network element via an access network device, and send, to the PCF network element through the connection, the N1 container that carries the second information. When the first function node is not the PCF network element, the PCF network element forwards the N1 container to the first function node, to send the second information to the first function node. When the first function node is the PCF network element, after the PCF network element receives the N1 container, the PCF network element may parse the second information in the N1 container, and does not forward the second information.

Optionally, in addition to the first PC5 connection, there may be further at least one PC5 connection between the first terminal device and the second terminal device. In this case, the first terminal device may further send related information of each of the at least one PC5 connection to the first function node. For the information, refer to the related descriptions of the second information. Details are not described herein again.

Optionally, in addition to the second terminal device, the first terminal device may further establish a PC5 connection to another terminal device (for example, at least one third terminal device). In this case, the first terminal device may further send related information of the at least one PC5 connection between the first terminal device and the at least one third terminal device to the first function node. In addition, in this scenario, each third terminal device may also send related information of the at least one PC5 connection between the third terminal device and the first terminal device to the first function node. For the related information of the PC5 connection, refer to the related descriptions of the second information. Details are not described herein again.

S803: The second terminal device sends third information to the first function node. Correspondingly, the first function node receives the third information from the second terminal device.

The third information indicates the first PC5 connection. For example, the third information is determined based on the information about the first PC5 connection.

Optionally, the third information includes the first layer 2 identifier, the second layer 2 identifier, and/or the identifier of the first PC5 connection. Reference may be made to the related descriptions in step S802. Details are not described herein again.

Further, the third information may further include at least one of the following four items.

### (1) Second identifier information.

Optionally, the second identifier information may be used as a unique identifier of the second device-side translator port. For example, the second identifier information may include at least one of the following: the MAC address corresponding to the second device-side translator port, an IMSI of the second terminal device, a TMSI of the second terminal device, or an IMEI of the second terminal device. Reference may be made to the related descriptions of the first identifier information. Details are not described herein again.

### (2) Device-side translator port management capability information of the second terminal device.

For implementation of the device-side translator port management capability information, refer to the related descriptions in step S802. Details are not described herein again.

### (3) Residence time corresponding to the second device-side translator port.

For the residence time corresponding to the second device-side translator port, refer to the related descriptions of the residence time corresponding to the first device-side translator port in step S802. Details are not described herein again.

### (4) Second application information.

Optionally, the second application information includes at least one of the following: an application identifier (Application ID) associated with the first PC5 connection, an application group identifier (Application group ID) associated with the first PC5 connection, an application layer identifier (Application Layer ID) associated with the first PC5 connection, or an identifier of a network served by the second terminal device. Reference may be made to the related descriptions of the first application information in step S802. Details are not described herein again.

(5) First identifier information. For descriptions of the first identifier information, refer to the related descriptions in step S802. Details are not described herein again.

Optionally, the second terminal device and the first terminal device may exchange the first identifier information and/or the second identifier information in a process of establishing the first PC5 connection or after the first PC5 connection is established.

Optionally, when the third information reported by the second terminal device includes the MAC address of the first device-side translator port of the first terminal device and the MAC address of the second device-side translator port of the second terminal device, the second terminal device may not report the first layer 2 identifier and the second layer 2 identifier, or may not report the identifier of the first PC5 connection.

Optionally, the second terminal device may send the third information to the first function node in a manner similar to Manner 1 or Manner 2 in step S802. Reference may be made to the related descriptions of Manner 1 and Manner 2. Details are not described herein again.

Optionally, in addition to the first PC5 connection, there may be further at least one PC5 connection between the first terminal device and the second terminal device. In this case, the second terminal device may further send related information of each of the at least one PC5 connection to the first function node. For the information, refer to the related descriptions of the third information. Details are not described herein again.

Optionally, in addition to the first terminal device, the second terminal device may further establish a PC5 connection to another terminal device (for example, at least one fourth terminal device). In this case, the second terminal device may further send related information of the at least one PC5 connection between the second terminal device and the at least one fourth terminal device to the first function node. In addition, in this scenario, each fourth terminal device may also send related information of the at least one PC5 connection between the fourth terminal device and the second terminal device to the first function node. For the related information of the PC5 connection, refer to the related descriptions of the third information. Details are not described herein again.

Optionally, when there is the PC5 connection between the fifth terminal device and the sixth terminal device, the fifth terminal device and the sixth terminal device may also send related information of the PC5 connection to the first function node. Reference may be made to the related descriptions of the second information and the third information. Details are not described herein again.

S804: The first function node determines first information. For implementation of the first information, refer to the related descriptions of the first information in step S701. Details are not described herein again.

Optionally, after receiving related information of a PC5 connection from each terminal device, the first function node may determine a structure of at least one bridge based on the information, to determine information about each bridge. The at least one bridge may include a first bridge, and the first bridge may be any one of the at least one bridge. That is, the first function node may determine a structure of the first bridge, to determine first information. Therefore, that the first function node determines first information may also be understood as: The first function node determines the first information based on the related information (including second information and/or third information) of the PC5 connection from each terminal device.

For example, if both the second information and the third information include the first layer 2 identifier and the second layer 2 identifier, after the first function node receives the second information and the third information, the first function node may determine that the second information reported by the first terminal device and the third information reported by the second terminal device match each other, that is, there is the first PC5 connection between the first terminal device and the second terminal device, and may further determine that the first bridge includes the first PC5 connection between the first terminal device and the second terminal device, the first device-side translator port, and the second device-side translator port.

Alternatively, if both the second information and the third information include the identifier of the first PC5 connection, after the first function node receives the second information and the third information, the first function node may learn that the identifier of the PC5 connection included in the second information is the same as that included in the third information, to determine that there is the first PC5 connection between the first terminal device and the second terminal device, further, and determine that the first bridge includes the first PC5 connection between the first terminal device and the second terminal device, the first device-side translator port, and the second device-side translator port.

For example, based on this scenario shown in FIG. 7b, the first function node may further determine, based on related information that is of a PC5 connection and that is reported by each of the first terminal device to the sixth terminal device, that a first bridge may further include a second PC5 connection and two device-side translator ports associated with the second PC5 connection, a third PC5 connection and two device-side translator ports associated with the third PC5 connection, and a fourth PC5 connection and two device-side translator ports associated with the fourth PC5 connection.

Optionally, when the related information that is of the PC5 connection and that is reported by each terminal device includes application information, the first function node may configure, in the first bridge, the PC5 connection between the terminal devices that support a same application or application group, or may configure, in the first bridge, the PC5 connection between the terminal devices that provide services for a same network. For example, based on this scenario shown in FIG. 7b, if all of the first terminal device to the sixth terminal device support a same application, the first function node may configure a first PC5 connection, a second PC5 connection, a third PC5 connection, and a fourth PC5 connection in a first bridge.

Optionally, the first function node may further determine the first bridge based on a connection relationship (for example, the PC5 connection). For example, in FIG. 7b, the first function node may configure, in the same bridge, the first terminal device to the sixth terminal device, these PC5 connections between these terminal devices, and device-side translator ports corresponding to these PC5 connections. For another example, because there is no PC5 connection between the fifth terminal device and another terminal device and no PC5 connection between the sixth terminal device and the another terminal device, the first terminal device to the fourth terminal device, the PC5 connections between these terminal devices, and device-side translator ports corresponding to the PC5 connections may be configured in a bridge (the first bridge), and the fifth terminal device and the sixth terminal device, the PC5 connection between the two devices and device-side translator ports corresponding to the PC5 connection are configured in another bridge (referred to as a second bridge, not shown in FIG. 7b).

Optionally, in the first bridge, each terminal device may correspond to one device-side translator port on each PC5 connection. In other words, each PC5 connection of a terminal device may be connected to one device-side translator port of the terminal device. For example, based on this scenario shown in FIG. 7b, the first PC5 connection of the first terminal device may correspond to the port #A, and the second PC5 connection of the first terminal device may correspond to the port #C; the first PC5 connection of the second terminal device may correspond to the port #B, and the third PC5 connection of the second terminal device may correspond to the port #E; the first PC5 connection of the third terminal device may correspond to the port #D; the third PC5 connection of the fourth terminal device may correspond to the port #F; the fourth PC5 connection of the fifth terminal device may correspond to the port #G; and the fourth PC5 connection of the sixth terminal device may correspond to the port #H.

Optionally, in the first bridge, each layer 2 identifier of each terminal device may correspond to one device-side translator port. For example, a device-side translator port corresponding to a layer 2 identifier may be a device-side translator port corresponding to a PC5 connection associated with the layer 2 identifier. When layer 2 identifiers determined by the terminal devices in the first bridge are different, it may also be considered that each layer 2 identifier in the first bridge may correspond to one device-side translator port.

It may be understood that descriptions of the first bridge in this embodiment of this application are also applicable to another bridge determined by the first function node. That is, the another bridge determined by the first function node may have a same feature as the first bridge.

Optionally, after the structure of the first bridge is determined, the first function node may determine the first information. For example, the first function node allocates (or configures) port numbers to (or for) device-side translator ports of at least two terminal devices in the first bridge, for example, allocates port numbers to the first device-side translator port and the second device-side translator port, and may further allocate port numbers to other device-side translator ports in the first bridge, the other device-side translator ports may include at least one of the following: device-side translator ports associated with a PC5 connection other than the first PC5 connection between the first terminal device and the second terminal device, device-side translator ports associated with a PC5 connection between the first terminal device and a third terminal device, device-side translator ports associated with a PC5 connection between the second terminal device and a fourth terminal device, or device-side translator ports associated with the PC5 connection between the fifth terminal device and the sixth terminal device.

Optionally, the first function node may further determine an identifier of the first bridge, or allocate (or configure) a bridge identifier to (or for) the first bridge. For a quantity of ports in the first bridge, after the structure of the first bridge is determined, the first function node may learn of the quantity of ports in the first bridge.

Optionally, for port pairs in the first bridge, the first function node may determine a valid port pair based on the PC5 connection relationship. For example, two device-side translator ports associated with one PC5 connection may be determined as one port pair.

Optionally, when determining structures of a plurality of bridge, the first function node may determine information about the bridges. For the information about the bridges, refer to the related descriptions of the first information. Details are not described herein again.

S805: The first function node sends first information to a second function node. Correspondingly, the second function node receives the first information from the first function node. Reference may be made to the related descriptions in step S702. Details are not described herein again.

Optionally, when the first function node determines the plurality of bridges, in step S805, the first function node may send the information about the bridges to the second function node.

Optionally, in addition to the structure of the first bridge, the first function node may further obtain port-related information of the first bridge. For example, as shown in FIG. 8, the first function node may obtain the port-related information of the first bridge by using the following steps S806 to S808.

S806: The first function node obtains propagation delays on the first device-side translator port and the second device-side translator port, and/or traffic class tables (traffic class tables) supported by the ports.

Optionally, a propagation delay on a port may be used to determine a propagation delay between the port and a port of another device. The traffic class table may be used to map data packets with different priorities to different service classes.

Optionally, in step S806, the first function node may send a subscription request for a port management information change to a first device-side translator and a second device-side translator. Then, the first device-side translator and the second device-side translator may send, to the first function node via port management information containers (port management information containers, PMICs), the propagation delays on the ports and/or the traffic class tables supported by the ports.

The first device-side translator belongs to the first terminal device, that is, the first device-side translator is a device-side translator of the first terminal device, and is configured to perform an operation related to the first device-side translator port. The second device-side translator belongs to the second terminal device, that is, the second device-side translator is a device-side translator of the second terminal device, and is configured to perform an operation related to the second device-side translator port.

For example, when sending the PMIC, the first device-side translator may provide the PMIC for the communication module of the first terminal device, the communication module sends the PMIC to the PCF network element, and then the PCF network element forwards the PMIC to the first function node. A manner in which the second device-side translator sends the PMIC is similar, and details are not described herein again.

Optionally, when the first bridge includes the plurality of PC5 connections, in step S806, the first function node may obtain a propagation delay on each device-side translator port associated with each PC5 connection and/or a traffic class table supported by the port.

Optionally, when the first function node determines the plurality of bridges, in step S806, the first function node may obtain a propagation delay on each device-side translator port associated with each PC5 connection in each bridge, and/or a traffic class table supported by the port.

S807: The first function node performs neighbor discovery configuration and subscribes to neighbor discovery information.

For example, the first function node may send neighbor discovery configuration information to the first device-side translator and/or the second device-side translator, and subscribe to the neighbor discovery information.

Optionally, the neighbor discovery configuration information is used to: configure and activate a link layer discovery protocol (link layer discovery protocol, LLDP) agent on a device-side translator.

Optionally, when one of the first device-side translator and the second device-side translator does not support neighbor discovery, or does not have a neighbor discovery capability, the first function node may configure another device-side translator to perform link layer neighbor discovery on behalf of the device-side translator that does not support the neighbor discovery.

For example, an example in which the second device-side translator does not have the neighbor discovery capability is used. The first function node may send the neighbor discovery configuration information of the second device-side translator to the first device-side translator, to configure and activate an LLDP agent of the first device-side translator to perform link layer neighbor discovery on behalf of the second device-side translator.

In this case, the first device-side translator may replace the second device-side translator to send an LLDP frame used to search for another neighbor device. For example, the first device-side translator provides the LLDP frame for the communication module of the first terminal device, then the communication module of the first terminal device sends the LLDP frame to a communication module of the second terminal device through the first PC5 connection (or another PC5 connection between the first terminal device and the second terminal device), the communication module of the second terminal device provides the LLDP frame to the second device-side translator of the second terminal device, and the second device-side translator then sends the LLDP frame to the another neighbor device via the second device-side translator port.

In addition, when the second device-side translator receives the LLDP frame, the second device-side translator may provide the LLDP frame for the communication module of the second terminal device, then the communication module of the second terminal device forwards the LLDP frame to the communication module of the first terminal device through the PC5 connection (for example, the first PC5 connection or the another PC5 connection between the first terminal device and the second terminal device) between the first terminal device and the second terminal device, and the communication module of the first terminal device then provides the LLDP frame for the first device-side translator of the first terminal device. Finally, the first terminal device (for example, the first device-side translator of the first terminal device) determines the another neighbor device (for example, a bridge or a TSN terminal) connected to the second device-side translator port of the second terminal device.

Based on this solution, the device-side translator of the second terminal device does not need to have a link layer neighbor discovery capability, so that a capability requirement on the second terminal device can be reduced.

Optionally, if the second device-side translator has the neighbor discovery capability, the LLDP agent of the first device-side translator may also be configured to perform link layer neighbor discovery on behalf of the second device-side translator. Based on this solution, implementation complexity of the second terminal device can be reduced.

Optionally, when the first bridge includes the plurality of PC5 connections, in step S807, the first function node may perform neighbor discovery configuration for each device-side translator associated with each PC5 connection, and subscribe to neighbor discovery information.

Optionally, when the first function node determines the plurality of bridges, in step S807, the first function node may perform neighbor discovery configuration for each device-side translator associated with each PC5 connection in each bridge, and subscribe to neighbor discovery information.

S808: The first function node obtains the neighbor discovery information.

In a possible implementation, when both the first device-side translator and the second device-side translator have the neighbor discovery capability, the first device-side translator may send first neighbor discovery information to the first function node, to indicate a neighbor device (for example, another bridge or a TSN terminal) of the first device-side translator port. In addition, the second device-side translator may send second neighbor discovery information to the first function node, to indicate a neighbor device (for example, another bridge or a TSN terminal) of the second device-side translator port.

In another possible implementation, when the first device-side translator has the neighbor discovery capability, and the second device-side translator does not have the neighbor discovery capability, the first device-side translator performs neighbor discovery on behalf of the second device-side translator, and the first device-side translator sends first neighbor discovery information and second neighbor discovery information to the first function node.

In still another possible implementation, when the first device-side translator does not have the neighbor discovery capability, and the second device-side translator has the neighbor discovery capability, the second device-side translator performs neighbor discovery on behalf of the first device-side translator, and the second device-side translator sends first neighbor discovery information and second neighbor discovery information to the first function node.

Optionally, when the first bridge includes the plurality of PC5 connections, in step S808, the first function node may obtain neighbor discovery information of each device-side translator associated with each PC5 connection.

Optionally, when the first function node determines the plurality of bridges, in step S808, the first function node may obtain neighbor discovery information of each device-side translator associated with each PC5 connection in each bridge.

Optionally, after steps S806 to S808, the first function node may report, to the second function node, the port-related information obtained in steps S806 to S808. The port-related information may be reported together with the first information in step S805, or may be reported separately from the first information. This is not specifically limited in this application.

In the communication method shown in FIG. 8, both the determining of the structure of the bridge and the sending of the first information are performed by the first function node. In addition, this application further provides another communication method. In the communication method, the structure of the bridge may be determined by a third function node, and the first information is sent by the first function node. The first function node may be deployed in the core network, to provide the conversion function of the control plane for the integration between the mobile communication system and the first network (for example, the first function node may send the first information to the second function node). For example, the first function node may be the AF network element (for example, the TSN AF network element).

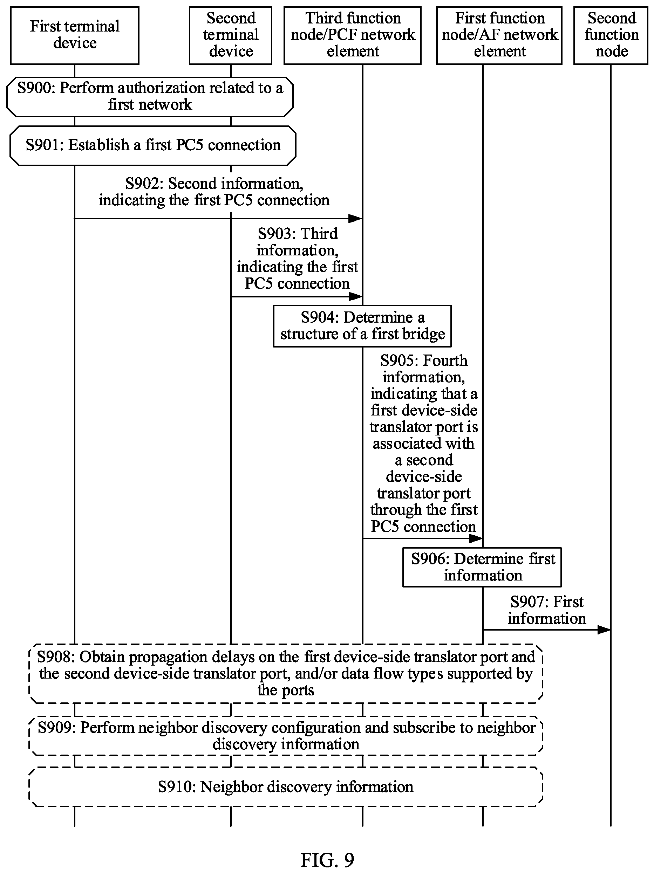

Optionally, the third function node may have a node management function. In some implementation scenarios, the third function node may be deployed in the core network. For example, the third function node may be a PCF network element. In addition, structures of the first terminal device and the second terminal device may be shown in FIG. 3. A schematic flowchart of a communication method is shown in FIG. 9. Refer to FIG. 9. The communication method includes the following steps.

S900 and S901 are the same as the foregoing steps S800 and S801. Reference may be made to the related descriptions of steps S800 and S801. Details are not described herein again.

S902: A first terminal device sends second information to a third function node. Correspondingly, the third function node receives the second information from the first terminal device.

For implementation of the second information, refer to the related descriptions in step S802. In addition, the first terminal device may send the second information to the third function node through a control plane connection. Reference may be made to the related descriptions in step S802. Details are not described herein again.

S903: A second terminal device sends third information to the third function node. Correspondingly, the third function node receives the third information from the second terminal device.

For implementation of the third information, refer to the related descriptions in step S803. In addition, the second terminal device may send the third information to the third function node through a control plane connection. Reference may be made to the related descriptions in step S803. Details are not described herein again.

Optionally, in addition to the second information and the third information, the first terminal device may further send, to the third function node, related information of another PC5 connection of the first terminal device (for example, a PC5 connection other than a first PC5 connection between the first terminal device and the second terminal device, or a PC5 connection between the first terminal device and a third terminal device), and the second terminal device may further send, to the third function node, related information of another PC5 connection of the second device (for example, a PC5 connection other than the first PC5 connection between the second terminal device and the first terminal device, or a PC5 connection between the second terminal device and a fourth terminal device). In addition, another terminal device (for example, the third terminal device, the fourth terminal device, a fifth terminal device, or a sixth terminal device) may also send related information of a PC5 connection to the third function node. Reference may be made to the related descriptions in steps S802 and S803. Details are not described herein again.

S904: The third function node determines a structure of a first bridge.

Optionally, the third function node may determine a structure of at least one bridge based on related information of a PC5 connection reported by each terminal device, to determine related information of each bridge. The at least one bridge includes the first bridge. Reference may be made to the related implementation of determining the structure of the first bridge by the first function node in step S804. Details are not described herein again.

S905: The third function node sends fourth information to the first function node. Correspondingly, the first function node receives the fourth information from the third function node.

The fourth information includes information about the first bridge. The fourth information indicates that a first device-side translator port is associated with a second device-side translator port. Specifically, the fourth information may indicate that the first device-side translator port is associated with the second device-side translator port through a first PC5 connection.

Optionally, in step S904, the third function node may determine that a first bridge includes the first PC5 connection between the first terminal device and the second terminal device, the first device-side translator port, and the second device-side translator port, to determine that the first device-side translator port is associated with the second device-side translator port through the first PC5 connection.

Optionally, that the fourth information includes the information about the first bridge may be understood as that the fourth information includes at least one of the following items: an identifier of the first bridge, a port number of the first device-side translator port, a port number of the second device-side translator port, an association relationship between the first device-side translator port and the second device-side translator port, or information about the first PC5 connection. The information about the first PC5 connection indicates the first PC5 connection. Therefore, the information about the first PC5 connection may also be referred to as information indicating the first PC5 connection. That is, the at least one of the foregoing items may also be understood as the information about the first bridge.

For example, the association relationship between the first device-side translator port and the second device-side translator port may indicate that the two device-side translator ports are ports associated through a PC5 connection (for example, the first PC5 connection).

Optionally, when the first bridge includes a plurality of PC5 connections, the fourth information may include port numbers of device-side translator ports associated with the PC5 connections and an association relationship between the device-side translator ports. An association relationship between two device-side translator ports may indicate that the two device-side translator ports are ports associated through a PC5 connection, or the two device-side translator ports are associated with a same PC5 connection.

In a possible implementation, the third function node may autonomously determine the identifier of the first bridge, and/or allocate the port numbers to the first device-side translator port and the second device-side translator port. For example, at least one of the identifier of the first bridge, the port number of the first device-side translator port, and the port number of the second device-side translator port is determined by the third function node based on configuration information. For example, the configuration information may be predefined in a protocol, or may be preconfigured or predefined by a network (for example, the first function node).

Optionally, the configuration information may include a bridge identifier list and/or a port number list. For example, the bridge identifier list includes at least one bridge identifier. The port number list includes at least one device-side translator port number.

Optionally, when the fourth information includes the identifier of the first bridge, it indicates that the third function node allocates or configures the identifier for the first bridge. For example, the third function node may allocate the identifier to the first bridge based on the bridge identifier list in the configuration information. That is, the bridge identifier list includes the identifier of the first bridge.

Optionally, when the fourth information includes the port number of the first device-side translator port and/or the port number of the second device-side translator port, it indicates that the third function node may configure the port number of the device-side translator port. For example, the third function node may allocate the port numbers to the first device-side translator port and/or the second device-side translator port based on the port number list in the configuration information. That is, the port number list includes the port number of the first device-side translator port and/or the port number of the second device-side translator port.

In another possible implementation, the third function node may alternatively apply to another function node for the identifier of the first bridge and/or the port numbers of the first device-side translator port and the second device-side translator port. For example, the third function node applies to the first function node for the identifier of the first bridge and/or the port numbers of the first device-side translator port and the second device-side translator port.

Optionally, the fourth information may further include a MAC address corresponding to the first device-side translator port and/or a MAC address corresponding to the second device-side translator port.

Optionally, in the fourth information, the MAC address corresponding to the first device-side translator port is associated with the port number of the first device-side translator port, and the MAC address corresponding to the second device-side translator port is associated with the port number of the second device-side translator port.

Optionally, when the third function node determines structures of a plurality of bridges, in step S905, the third function node may send related information of each bridge to the first function node. For the related information of each bridge, refer to the descriptions of the fourth information. Details are not described herein again.

S906: The first function node determines first information. For implementation of the first information, refer to the related descriptions of the first information in step S701. Details are not described herein again.

Optionally, the first function node may determine the first information based on the fourth information. For example, when the fourth information does not include the identifier of the first bridge, that the first function node determines first information may include: The first function node determines the identifier of the first bridge. When the fourth information includes the identifier of the first bridge, that the first function node determines first information may include: The first function node uses, as the identifier of the first bridge in the first information, the identifier of the first bridge included in the information about the first bridge.

When the fourth information does not include the port number of the first device-side translator port and/or the port number of the second device-side translator port, that the first function node determines first information may include: The first function node allocates the port numbers to the first device-side translator port and/or the second device-side translator port. When the fourth information includes the port number of the first device-side translator port and/or the port number of the second device-side translator port, that the first function node determines first information may include: The first function node uses, as the port number of the first device-side translator port and/or the port number of the second device-side translator port that are/is in the first information, the port number of the first device-side translator port and/or the port number of the second device-side translator port that are/is included in the information about the first bridge.

Optionally, when the first information includes a quantity of ports in the first bridge, the first function node may determine a quantity of PC5 connections based on the information that is carried in the fourth information and that indicates the PC5 connection, to determine the quantity of ports in the first bridge. Alternatively, the first function node may determine the quantity of ports in the first bridge based on the numbers of the device-side translator ports in the fourth information.

Optionally, when the first information includes port pair information, the first function node may determine a port pair based on the association relationship that is between the first device-side translator port and the second device-side translator port and that is carried in the fourth information, for example, determine device-side translator ports with an association relationship as a port pair. Similarly, when the first bridge includes the plurality of PC5 connections, a plurality of port pairs may be determined based on a plurality of groups of device-side translator ports with association relationships.

Optionally, when the third function node determines the structures of the plurality of bridges, in step S906, the first function node may determine information about the bridges. For the information about the bridges, refer to the descriptions of the first information. Details are not described herein again.

S907: The first function node sends first information to a second function node. Correspondingly, the second function node receives the first information from the first function node. Reference may be made to the related descriptions in step S702. Details are not described herein again.

Optionally, when the first function node in step S906 determines information of the plurality of bridges, in step S907, the first function node may send the information about the bridges to the second function node.

S908 to S910 are the same as the foregoing steps S806 to S808. Reference may be made to the related descriptions of steps S806 to S808. Details are not described herein again.

Based on the method shown in FIG. 9, integration between a mobile communication system (for example, a 5GS) and another network (for example, a TSN network) can be supported by using the PC5 connection, thereby improving a capability of the mobile communication system to support the another network, and improving deployment flexibility of the network. In addition, the third function node (for example, a PCF) performs a node management function to determine the structure of the bridge, thereby reducing implementation complexity of the first function node (for example, a TSN AF).

In some other implementation scenarios, in addition to being deployed in a core network, the third function node may alternatively be deployed on the first terminal device. That is, the first terminal device has a node management function, and the structure of the bridge may be determined by the first terminal device. In this scenario, the first function node is deployed in the core network, to provide a conversion function of a control plane for integration between a mobile communication system and a first network (for example, the first function node may send the first information to the second function node). For example, the first function node may be an AF network element (for example, a TSN AF network element) or a PCF network element. In addition, a structure of the first terminal device may be shown in (a) in FIG. 4, and a structure of the second terminal device may be shown in FIG. 3.

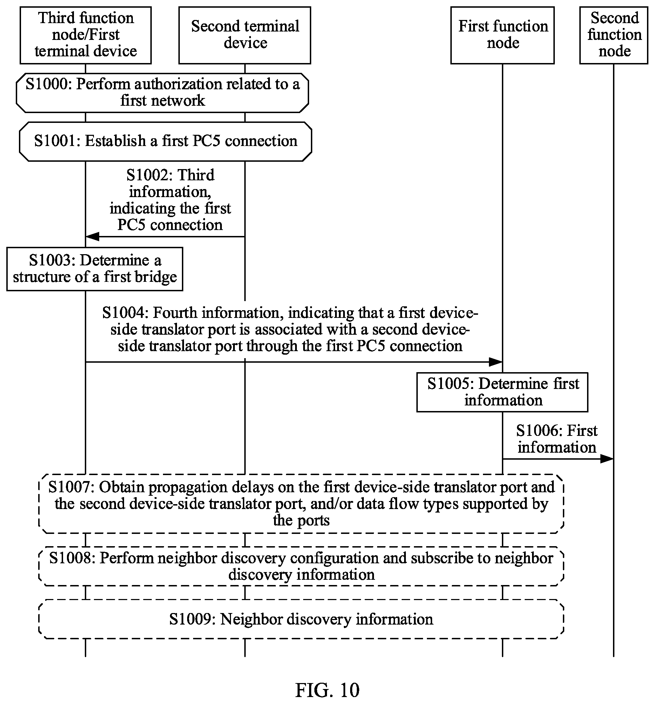

In this scenario, a schematic flowchart of a communication method provided in this application is shown in FIG. 10. Refer to FIG. 10. The communication method includes the following steps.

S1000: This step is similar to step S800, and a difference lies in that in step S1000, a first terminal device may be further authorized to have a node management function, or the node management function is authorized to the first terminal device.

For example, for the node management function, refer to the foregoing related descriptions of the node management function. The node management function may be authorized by the network side. For example, a PCF network element, an application server, or an operations, administration and maintenance (operations, administration and maintenance, OAM) node may send authorization information to the first terminal device, where the authorization information is used to authorize the first terminal device to have the node management function. Correspondingly, the first terminal device obtains (for example, receives) the authorization information, to learn that the node management function is authorized to the first terminal device.

Optionally, the authorization information may include a device-side translator port number list and/or at least one bridge identifier. For example, the first terminal device may allocate a port number to a device-side translator port in a bridge based on the device-side translator port number list; or allocate an identifier to a bridge based on the at least one bridge identifier.

Optionally, each of the at least one bridge identifier may correspond to (or be associated with) one application (or service). That is, when supporting a plurality of applications, the first terminal device may be authorized with a plurality of bridge identifiers, so that the first terminal device can allocate different identifiers to bridges serving different applications.

Optionally, after the node management function is authorized to the first terminal device, when a PC5 connection is established between the first terminal device and another terminal device, the first terminal device may determine a structure of a bridge, and maintain related information of the bridge.

S1001: Establish a first PC5 connection between the first terminal device and a second terminal device.

Step S1001 is similar to step S801, and a difference lies in that the first terminal device may send sixth information to the second terminal device in a process of establishing the first PC5 connection between the first terminal device and the second terminal device or after the establishment of the first PC5 connection is completed. Alternatively, the first terminal device may include sixth information in a discovery message (Discovery message) before the first PC5 connection is established.

The sixth information indicates that a third function node is deployed on the first terminal device, or indicates that the first terminal device has the node management function.

Correspondingly, the second terminal device receives the sixth information from the first terminal device, and learns that the first terminal device has the node management function, to perform the following step S1002. That is, after determining that the first terminal device has the node management function, the second terminal device performs the following step S1002.

Optionally, in addition to the first PC5 connection, at least one PC5 connection may be further established between the first terminal device and the second terminal device. That is, a plurality of PC5 connections may be established between the first terminal device and the second terminal device. In addition, in addition to the second terminal device, the first terminal device may further establish a PC5 connection to another terminal device (for example, at least one third terminal device). In this case, the first terminal device may further send the sixth information to at least one third terminal device, so that the at least one third terminal device sends related information of a PC5 connection to the first terminal device. For the information, refer to the related descriptions of the third information. Details are not described herein again.

S1002: The second terminal device sends third information to the first terminal device. Correspondingly, the first terminal device receives the third information from the second terminal device. For implementation of the third information, refer to the foregoing related descriptions. Details are not described herein again.

Optionally, the second terminal device may send the third information to the first terminal device through the first PC5 connection between the second terminal device and the first terminal device.

S1003: The first terminal device determines a structure of a first bridge.

Optionally, after receiving the third information, the first terminal device may determine the structure of the first bridge based on the third information and second information known to the first terminal device. Reference may be made to the related implementation of determining the structure of the first bridge by the first function node in step S804. Details are not described herein again.

S1004: The first terminal device sends fourth information to the first function node. Correspondingly, the first function node receives the fourth information from the first terminal device.

The fourth information includes information about the first bridge. For implementation of the fourth information, refer to the related descriptions in step S905. Details are not described herein again.

Optionally, in step S1003, the first terminal device may determine that the first bridge includes the first PC5 connection between the first terminal device and the second terminal device, a first device-side translator port, and a second device-side translator port, to determine that the first device-side translator port is associated with the second device-side translator port through the first PC5 connection.

Optionally, for a manner in which the first terminal device sends the fourth information to the first function node, refer to Manner 1 or Manner 2 in step S802. Details are not described herein again.

S1005 and S1006 are the same as steps S906 and S907. Reference may be made to the related descriptions of steps S906 and S907. Details are not described herein again.

S1007 to S1009 are the same as the foregoing steps S806 to S808. Reference may be made to the related descriptions of steps S806 to S808. Details are not described herein again.

Based on the method shown in FIG. 10, integration between a mobile communication system (for example, a 5GS) and another network (for example, a TSN network) can be supported by using the PC5 connection, thereby improving a capability of the mobile communication system to support the another network, and improving deployment flexibility of the network. In addition, the first terminal device performs a node management function to determine the structure of the bridge, thereby reducing implementation complexity of the first function node (for example, a TSN AF).

The foregoing uses an example in which the first function node is deployed in a core network for description. In addition, the first function node may be deployed on the first terminal device, and the first function node may provide a conversion function of a control plane (briefly referred to as a control plane conversion function below) for integration between a mobile communication system and a first network, and may provide a node management function (briefly referred to as a node management function below) for at least one PC5 bridge. For example, in this scenario, a structure of the first terminal device may be shown in (b) in FIG. 4 or (c) in FIG. 4, and a structure of the second terminal device may be shown in FIG. 3.

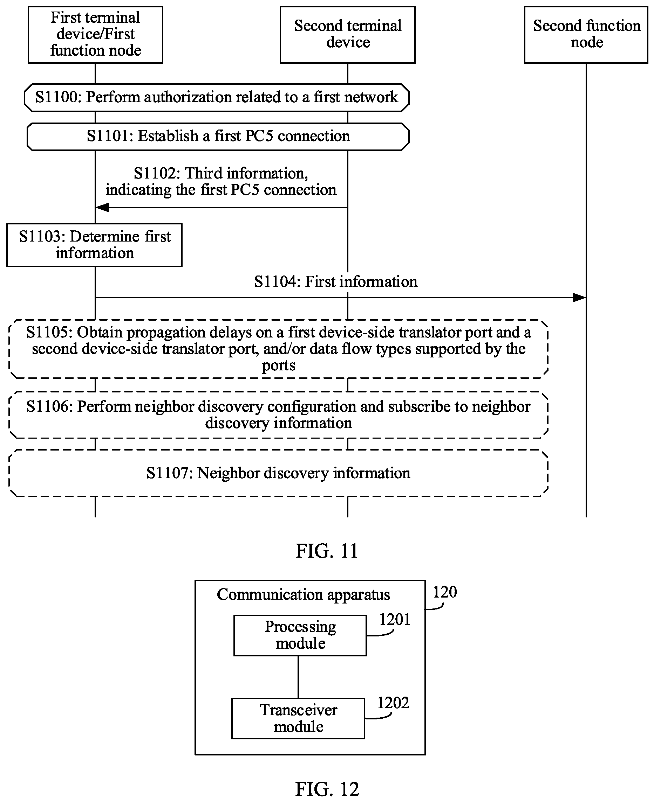

In this scenario, a communication method shown in FIG. 11 may be used as another implementation of the method shown in FIG. 7a. Refer to FIG. 11. The communication method includes the following steps.

S1100: This step is similar to step S800, and a difference lies in that in step S1100, a first terminal device may be further authorized to have a control plane conversion function and a node management function, or the control plane conversion function and the node management function are authorized to the first terminal device. That is, the first terminal device may determine a structure of a bridge and interact with a first network. For example, the first terminal device may receive configuration information or scheduling information from a second function node (for example, TSN CNC), or may send information about the bridge to the second function node (for example, the TSN CNC).

When an AF function or a TSN AF function integrates both the control plane conversion function and the node management function, it may also be understood that the first terminal device is authorized to have an AF function/a TSN AF function, or the AF function/the TSN AF function is authorized to the first terminal device.

Optionally, the control plane conversion function and the node management function or the AF function may be authorized by a network side; or may be configured and authorized by an OAM side, or may be configured and authorized by an application server. This is not specifically limited in this application.

For example, the network side, the OAM side, or the application server may send (or configure) authorization information to the first terminal device, where the authorization information is used to authorize the first terminal device to have the control plane conversion function and the node management function (or the AF function or the TSN AF function). Correspondingly, the first terminal device obtains the authorization information, to learn that the control plane conversion function and the node management function (or the AF function or the TSN AF function) are authorized to the first terminal device.

Optionally, the authorization information may include a device-side translator port number list and/or at least one bridge identifier. Reference may be made to the related descriptions in step S1000. Details are not described herein again.

Optionally, the authorization information may further include address information of the second function node. The address information may be used by the first terminal device to report the information about the bridge to the second function node.

S1101: Establish a first PC5 connection between the first terminal device and a second terminal device.

Step S1101 is similar to step S801, and a difference lies in that the first terminal device may send fifth information to the second terminal device in a process of establishing the first PC5 connection between the first terminal device and the second terminal device or after the establishment of the first PC5 connection is completed. Alternatively, the first terminal device may include fifth information in a discovery message before the first PC5 connection is established.

The fifth information indicates that a first function node is deployed on the first terminal device, indicates that the first terminal device has the control plane conversion function and the node management function, indicates that the first terminal device can report first information to the second function node, or indicates that the first terminal device has the AF function (or the TSN AF function).

Correspondingly, the second terminal device receives the fifth information from the first terminal device, and learns that the first terminal device has the control plane conversion function and the node management function (or the AF function or the TSN AF function), to perform the following step S1102. That is, after determining that the first terminal device has the control plane conversion function and the node management function (or the AF function or the TSN AF function), the second terminal device performs the following step S1102.

Optionally, in addition to the first PC5 connection, at least one PC5 connection may be further established between the first terminal device and the second terminal device. That is, a plurality of PC5 connections may be established between the first terminal device and the second terminal device. In this scenario, the second terminal device sends related information of each of the plurality of PC5 connections to the first terminal device.

Optionally, in addition to the second terminal device, the first terminal device may further establish a PC5 connection to another terminal device (for example, at least one third terminal device). In this case, the first terminal device may further send the fifth information to the at least one third terminal device. After receiving the fifth information and learning that the first terminal device has the control plane conversion function and the node management function (or the AF function or the TSN AF function), the at least one third terminal device may send related information of a PC5 connection to the first terminal device. For the information, refer to the related descriptions of the third information. Details are not described herein again.

Optionally, after learning that the first terminal device is authorized with the control plane transition function and the node management function (or the AF function or the TSN AF function), the first terminal device may further send broadcast information on an SL, to broadcast that the first terminal device has the control plane conversion function and the node management function (or the AF function or the TSN AF function), so that a terminal device having a PC5 connection can send related information of the PC5 connection to the first terminal device.

For example, in addition to the first terminal device, the second terminal device may further establish a PC5 connection to another terminal device (for example, at least one fourth terminal device). In this scenario, after receiving the broadcast message from the first terminal device, the fourth terminal device may send the related information of the PC5 connection to the first terminal device, and the second terminal device may also send the related information of the PC5 connection to the first terminal device. For the information, refer to the related descriptions of the third information. Details are not described herein again.

In addition, a PC5 connection may alternatively be established between terminal devices other than the first terminal device and the second terminal device (for example, between a fifth terminal device and a sixth terminal device). In this scenario, after receiving the broadcast message from the first terminal device, both the fifth terminal device and the sixth terminal device may send the related information of the PC5 connection to the first terminal device. For the information, refer to the related descriptions of the third information. Details are not described herein again.

S1102: The second terminal device sends third information to the first terminal device. Correspondingly, the first terminal device receives the third information from the second terminal device. For implementation of the third information, refer to the foregoing related descriptions. Details are not described herein again.

Optionally, the second terminal device may send the third information to the first terminal device through the first PC5 connection between the second terminal device and the first terminal device.

S1103: The first terminal device determines first information. For implementation of the first information, refer to the related descriptions of the first information in step S701. Details are not described herein again.

Optionally, step S1103 may also be understood as: The first function node deployed on the first terminal device determines the first information.

Optionally, after receiving related information of a PC5 connection from each terminal device, the first terminal device may determine a structure of a bridge based on the received information of the PC5 connection. For example, the first terminal device may determine a structure of a first bridge based on the third information and related information (for example, second information) that is of the first PC5 connection and that is known to the first terminal device, to determine the first information. Reference may be made to the related descriptions in step S804. Details are not described herein again.

S1104: The first terminal device sends first information to the second function node. Correspondingly, the second function node receives the first information from the first terminal device.

Optionally, step S1104 may also be understood as: The first function node deployed on the first terminal device sends the first information to the second function node.

S1105 to S1107 are similar to steps S806 to S808, and a difference lies in that: The function that is performed by the first function node and that is implemented by using a core network element/node/function in steps S806 to S808 is performed by the first function node deployed on the first terminal device in steps S1105 to S1107, and the port-related information in steps S806 to S808 is sent and received through the PC5 connection between the first terminal device and the second terminal device.

For example, inside the second terminal device, the device-side translator of the second terminal device may first send the port-related information to the communication module of the second terminal device, and the communication module of the second terminal device then sends the port-related information to the first terminal device through the PC5 connection between the first terminal device and the second terminal device. For example, the port-related information is sent to the communication module of the first terminal device, and the communication module of the first terminal device then sends the port-related information to the first function node deployed on the first terminal device.

For example, inside the first terminal device, the first function node deployed on the first terminal device may send the configuration and subscription information in steps S806 to S808 to the communication module of the first terminal device, and the communication module of the first terminal device then sends the configuration and subscription information to the communication module of the second terminal device through the PC5 connection between the first terminal device and the second terminal device. The communication module of the second terminal device sends the configuration and the subscription information to the device-side translator of the second terminal device.

In addition, it should be noted that steps S1105 to S1107 are optional steps, that is, steps S1105 to S1107 may not be performed.

In addition, the methods shown in FIG. 10 and FIG. 11 may be combined to form a new embodiment. For example, when the first terminal device in the method shown in FIG. 10 has the node management function but does not have the control plane conversion function, the first function node in FIG. 10 may be replaced with a terminal device (denoted as an eighth terminal device) having the control plane conversion function.

Optionally, when the AF function integrates both the control plane conversion function and the node management function, the eighth terminal device may have the AF function, that is, the eighth terminal device has the control plane conversion function and the node management function. In this case, a structure of the eighth terminal device may be shown in (b) in FIG. 4.

Optionally, when the AF function integrates the control plane conversion function and does not integrate the node management function, the eighth terminal device may have the AF function and the node management function. In this case, a structure of the eighth terminal device may be shown in (c) in FIG. 4. Alternatively, the eighth terminal device may have the AF function but does not have the node management function. In this case, a structure of the eighth terminal device may be shown in (b) in FIG. 4.

That is, the first terminal device may determine a structure of a bridge, and report related information of one or more bridges (refer to the fourth information) to the eighth terminal device, and the eighth terminal device then reports the information about the one or more bridges (refer to the first information) to the second function node.

It may be understood that, in the foregoing embodiments, the methods and/or steps implemented by the first function node may alternatively be implemented by a component (for example, a processor, a chip, a chip system, a circuit, a logic module, or software such as a chip or a circuit) that can be used in the first function node. The methods and/or steps implemented by the third function node may alternatively be implemented by a component (for example, a processor, a chip, a chip system, a circuit, a logic module, or software such as a chip or a circuit) that can be used in the third function node. The methods and/or steps implemented by the first terminal device may alternatively be implemented by a component (for example, a processor, a chip, a chip system, a circuit, a logic module, or software such as a chip or a circuit) that can be used in the first terminal device. The methods and/or steps implemented by the second terminal device may alternatively be implemented by a component (for example, a processor, a chip, a chip system, a circuit, a logic module, or software such as a chip or a circuit) that can be used in the second terminal device.

The foregoing mainly describes the solutions provided in this application. Correspondingly, this application further provides a communication apparatus. The communication apparatus is configured to implement the foregoing methods. The communication apparatus may be the first function node in the foregoing method embodiments, an apparatus including the first function node, or a component that can be used in the first function node; the communication apparatus may be the third function node in the foregoing method embodiments, an apparatus including the third function node, or a component that can be used in the third function node; the communication apparatus may be the first terminal device in the foregoing method embodiments, or an apparatus including the first terminal device, or a component that can be used in the first terminal device; or the communication apparatus may be the second terminal device in the foregoing method embodiments, or an apparatus including the second terminal device, or a component that can be used in the second terminal device.

It may be understood that, to implement the foregoing functions, the communication apparatus includes a corresponding hardware structure and/or software module for performing each function. A person skilled in the art should be easily aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, division into functional modules may be performed on the communication apparatus based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, the division into the modules is an example, and is merely a logical function division. In actual implementation, another division manner may be used.

FIG. 12 is a diagram of a structure of a communication apparatus 120. The communication apparatus 120 includes a processing module 1201 and a transceiver module 1202. The communication apparatus 120 may be configured to implement a function of the first function node, the second communication device, or the third function node.

In some embodiments, the communication apparatus 120 may further include a storage module (not shown in FIG. 12), configured to store program instructions and data.

In some embodiments, the transceiver module 1202 may also be referred to as a transceiver unit, and is configured to implement a sending function and/or a receiving function. The transceiver module 1202 may include a transceiver circuit, a transceiver device, a transceiver, or a communication interface.

In some embodiments, the transceiver module 1202 may include a receiving module and a sending module, which are respectively configured to perform receiving and sending steps performed by the first function node, the third function node, the first terminal device, or the second terminal device in the foregoing method embodiments, and/or configured to support another process of the technology described in this specification; and the processing module 1201 may be configured to perform processing (for example, determining or generation) steps performed by the first function node, the third function node, the first terminal device, or the second terminal device in the foregoing method embodiments, and/or configured to support another process of the technology described in this specification.

When the communication apparatus 120 is configured to implement the function of the first function node,
the processing module 1201 is configured to determine first information, and the transceiver module 1202 is configured to send the first information to a second function node. The first information indicates a first bridge, and the first bridge includes a PC5 connection between at least two terminal devices and device-side translator ports of the at least two terminal devices. The first information includes at least one of an identifier of the first bridge, a quantity of ports in the first bridge, or port numbers of the device-side translator ports of the at least two terminal devices.

Optionally, the at least two terminal devices include a first terminal device and a second terminal device; and before the first information is determined, the transceiver module 1202 is further configured to receive second information from the first terminal device, where the second information indicates a first PC5 connection, and the first PC5 connection is a PC5 connection between the first terminal device and the second terminal device.

Optionally, the second information includes a first layer 2 identifier and a second layer 2 identifier. The first layer 2 identifier is an identifier of the first terminal device on the first PC5 connection, and the second layer 2 identifier is an identifier of the second terminal device on the first PC5 connection.

Optionally, the second information includes an identifier of the first PC5 connection.

Optionally, the second information includes at least one of the following: first identifier information, second identifier information, device-side translator port management capability information of the first terminal device, or first application information. The first identifier information includes at least one of the following: a medium access control MAC address corresponding to the device-side translator port of the first terminal device, an international mobile subscriber identity IMSI of the first terminal device, a temporary mobile subscriber identity TMSI of the first terminal device, or an international mobile equipment identity IMEI of the first terminal device. The second identifier information includes at least one of the following: a MAC address corresponding to a device-side translator port of the second terminal device, an IMSI of the second terminal device, a TMSI of the second terminal device, or an IMEI of the second terminal device. The first application information includes at least one of the following: an application identifier associated with the first PC5 connection, an application group identifier associated with the first PC5 connection, an application layer identifier associated with the first PC5 connection, or an identifier of a network served by the first terminal device.

Optionally, before the first information is determined, the transceiver module 1202 is further configured to receive third information from the second terminal device, where the third information indicates the first PC5 connection.

Optionally, that the processing module 1201 is configured to determine first information includes: The processing module 1201 is configured to allocate port numbers to the device-side translator ports of the at least two terminal devices.

Optionally, that the processing module 1201 is configured to determine first information includes: The processing module 1201 is configured to determine the identifier of the first bridge.

Optionally, the at least two terminal devices include a first terminal device and a second terminal device; and the transceiver module 1202 is further configured to receive fourth information from a third function node, where the fourth information includes information about the first bridge, and the fourth information indicates that a device-side translator port of the first terminal device is associated with a device-side translator port of the second terminal device.

Optionally, the fourth information indicates that the device-side translator port of the first terminal device is associated with the device-side translator port of the second terminal device through a first PC5 connection, and the first PC5 connection is a PC5 connection between the first terminal device and the second terminal device.

Optionally, the fourth information includes at least one of the following: an identifier of the first bridge, a port number of the device-side translator port of the first terminal device, a port number of the device-side translator port of the second terminal device, or information indicating the first PC5 connection.

Optionally, the fourth information further includes a MAC address corresponding to the device-side translator port of the first terminal device and/or a MAC address corresponding to the device-side translator port of the second terminal device.

Optionally, the third function node is a policy control function PCF network element, or the third function node is deployed on the first terminal device.

Optionally, the first terminal device has a node management function.

Optionally, the first function node is an application function AF network element.

Optionally, the first function node is a PCF network element.

Optionally, the at least two terminal devices include a first terminal device, and the first function node is deployed on the first terminal device, and the first terminal device has a control plane conversion function and a node management function (or an AF function or a TSN AF function).

Optionally, the at least two terminal devices further include a second terminal device, and the transceiver module 1202 is further configured to send fifth information to the second terminal device, where the fifth information indicates that the first function node is deployed on the first terminal device.

Optionally, the at least two terminal devices include a first terminal device and a second terminal device; and the transceiver module 1202 is further configured to configure a device-side translator of the first terminal device to perform link layer neighbor discovery on behalf of a device-side translator of the second terminal device.

Optionally, the second function node is a centralized network configuration CNC network element in time-sensitive networking TSN.

When the communication apparatus 120 is configured to implement the function of the third function node,
the processing module 1201 is configured to determine fourth information, and the transceiver module 1202 is configured to send the fourth information to a first function node. The fourth information includes information about a first bridge, the first bridge includes a PC5 connection between at least two terminal devices and device-side translator ports of the at least two terminal devices, the at least two terminal devices include a first terminal device and a second terminal device, there is a first PC5 connection between the first terminal device and the second terminal device, and the fourth information indicates that a device-side translator port of the first terminal device is associated with a device-side translator port of the second terminal device.

Optionally, the fourth information includes at least one of the following: an identifier of the first bridge, a port number of the device-side translator port of the first terminal device, a port number of the device-side translator port of the second terminal device, or information indicating the first PC5 connection.

Optionally, at least one of the identifier of the first bridge, the port number of the device-side translator port of the first terminal device, and the port number of the device-side translator port of the second terminal device is determined based on configuration information.

Optionally, before the fourth information is determined, the transceiver module 1202 is further configured to receive third information from the second terminal device, where the third information indicates the first PC5 connection.

Optionally, before the fourth information is determined, the transceiver module 1202 is further configured to receive second information from the first terminal device, where the second information indicates the first PC5 connection.

Optionally, the second information includes a first layer 2 identifier and a second layer 2 identifier. The first layer 2 identifier is an identifier of the first terminal device on the first PC5 connection, and the second layer 2 identifier is an identifier of the second terminal device on the first PC5 connection.

Optionally, the second information includes an identifier of the first PC5 connection.

Optionally, the second information further includes at least one of the following: first identifier information, second identifier information, device-side translator port management capability information of the first terminal device, or first application information. The first identifier information includes at least one of the following: a medium access control MAC address corresponding to the device-side translator port of the first terminal device, an international mobile subscriber identity IMSI of the first terminal device, a temporary mobile subscriber identity TMSI of the first terminal device, or an international mobile equipment identity IMEI of the first terminal device. The second identifier information includes at least one of the following: a MAC address corresponding to the device-side translator port of the second terminal device, an IMSI of the second terminal device, a TMSI of the second terminal device, or an IMEI of the second terminal device. The first application information includes at least one of the following: an application identifier associated with the first PC5 connection, an application group identifier associated with the first PC5 connection, an application layer identifier associated with the first PC5 connection, or an identifier of a network served by the first terminal device.

Optionally, the third function node is deployed on the first terminal device.

Optionally, the transceiver module 1202 is further configured to send sixth information to the second terminal device, where the sixth information indicates that the third function node is deployed on the first terminal device.

Optionally, the third function node is a policy control function PCF network element.

Optionally, the first function node is an application function AF network element.

When the communication apparatus 120 is configured to implement the function of the second terminal device,
the processing module 1201 is configured to establish a first PC5 connection to a first terminal device; and the transceiver module 1202 is configured to send third information to a first function node or a third function node, where the third information indicates the first PC5 connection, the third information is further used to determine a first bridge, and the first bridge includes a PC5 connection between at least two terminal devices and device-side translator ports of the at least two terminal devices. The at least two terminal devices include the first terminal device and the second terminal device.

Optionally, the third information includes a first layer 2 identifier and a second layer 2 identifier. The first layer 2 identifier is an identifier of the first terminal device on the first PC5 connection, and the second layer 2 identifier is an identifier of the second terminal device on the first PC5 connection.

Optionally, the third information includes an identifier of the first PC5 connection.

Optionally, the third information further includes at least one of the following: second identifier information, first identifier information, device-side translator port management capability information of the second terminal device, or second application information. The second identifier information includes at least one of the following: a medium access control MAC address corresponding to a device-side translator port of the second terminal device, an international mobile subscriber identity IMSI of the second terminal device, a temporary mobile subscriber identity TMSI of the second terminal device, or an international mobile equipment identity IMEI of the second terminal device. The first identifier information includes at least one of the following: a MAC address corresponding to a device-side translator port of the first terminal device, an IMSI of the first terminal device, a TMSI of the first terminal device, or an IMEI of the first terminal device. The second application information includes at least one of the following: an application identifier associated with the first PC5 connection, an application group identifier associated with the first PC5 connection, an application layer identifier associated with the first PC5 connection, or an identifier of a network served by the second terminal device.

Optionally, the first function node is deployed on the first terminal device; and the transceiver module 1202 is further configured to receive fifth information from the first terminal device, where the fifth information indicates that the first function node is deployed on the first terminal device.

Optionally, the third function node is deployed on the first terminal device; and the transceiver module 1202 is further configured to receive sixth information from the first terminal device, where the sixth information indicates that the third function node is deployed on the first terminal device.

When the communication apparatus 120 is configured to implement the function of the first terminal device,
the processing module 1201 is configured to establish a first PC5 connection to a second terminal device; and the processing module 1201 is further configured to determine information about the first PC5 connection. The information about the first PC5 connection is used to determine a first bridge, and the first bridge includes a PC5 connection between at least two terminal devices and device-side translator ports of the at least two terminal devices. The at least two terminal devices include the first terminal device and the second terminal device.

Optionally, the transceiver module 1202 is configured to send second information to a first function node or a third function node, where the second information is determined based on the information about the first PC5 connection.

Optionally, the second information includes a first layer 2 identifier and a second layer 2 identifier. The first layer 2 identifier is an identifier of the first terminal device on the first PC5 connection, and the second layer 2 identifier is an identifier of the second terminal device on the first PC5 connection.

Optionally, the second information includes an identifier of the first PC5 connection.

Optionally, the second information further includes at least one of the following: first identifier information, second identifier information, device-side translator port management capability information of the first terminal device, or first application information. The first identifier information includes at least one of the following: a medium access control MAC address corresponding to a device-side translator port of the first terminal device, an international mobile subscriber identity IMSI of the first terminal device, a temporary mobile subscriber identity TMSI of the first terminal device, or an international mobile equipment identity IMEI of the first terminal device. The second identifier information includes at least one of the following: a MAC address corresponding to a device-side translator port of the second terminal device, an IMSI of the second terminal device, a TMSI of the second terminal device, or an IMEI of the second terminal device. The first application information includes at least one of the following: an application identifier associated with the first PC5 connection, an application group identifier associated with the first PC5 connection, an application layer identifier associated with the first PC5 connection, or an identifier of a network served by the first terminal device.

Optionally, the first function node is deployed on the first terminal device; and the transceiver module 1202 is further configured to send first information to a second function node, where the first information indicates the first bridge, and the first information includes at least one of an identifier of the first bridge, a quantity of ports in the first bridge, or port numbers of the device-side translator ports of the at least two terminal devices.

Optionally, the transceiver module 1202 is further configured to send fifth information to the second terminal device, where the fifth information indicates that the first function node is deployed on the first terminal device.

Optionally, the processing module 1201 is further configured to obtain authorization information, where the authorization information is used to authorize the first terminal device to have a control plane conversion function and a node management function (or an AF function or a TSN AF function).

Optionally, a third function node is deployed on the first terminal device or the first terminal device has a node management function. The transceiver module 1202 is further configured to send fourth information to the first function node, where the fourth information includes information about a first bridge, the first bridge includes a PC5 connection between at least two terminal devices and device-side translator ports of the at least two terminal devices, and the at least two terminal devices include the first terminal device and a second terminal device. There is a first PC5 connection between the first terminal device and the second terminal device. The fourth information indicates that a device-side translator port of the first terminal device is associated with a device-side translator port of the second terminal device.

Optionally, the transceiver module 1202 is further configured to send sixth information to the second terminal device, where the sixth information indicates that the third function node is deployed on the first terminal device.

Optionally, the processing module 1201 is further configured to obtain authorization information, where the authorization information is used to authorize the first terminal device to have the node management function.

Optionally, the authorization information includes at least one of the following: a device-side translator port number list or at least one bridge identifier.

All related content of the steps in the foregoing method embodiments may be cited in function descriptions of the corresponding functional modules. Details are not described herein again.

In this application, the communication apparatus 120 is presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another device that can provide the foregoing functions.

In a possible product form, a person skilled in the art may figure out that the communication apparatus 120 may be in a form of the communication apparatus 500 shown in FIG. 5a.

In an example, a function/an implementation process of the processing module 1201 in FIG. 12 may be implemented by using the processor 501 in the communication apparatus 500 shown in FIG. 5a by invoking the computer-executable instructions stored in the memory 503, a function/an implementation process of the transceiver module 1202 in FIG. 12 may be implemented by using the communication interface 504 in the communication apparatus 500 shown in FIG. 5a.

In another possible product form, the communication apparatus in this embodiment of this application may alternatively be implemented by using the following: one or more field programmable gate arrays (field programmable gate arrays, FPGAs), a programmable logic device (programmable logic device, PLD), a controller, a state machine, gate logic, and a discrete hardware component, any other appropriate circuit, or any combination of circuits that can perform various functions described throughout this application.

In some embodiments, when the communication apparatus 120 in FIG. 12 is a chip or a chip system, a function/an implementation process of the transceiver module 1202 may be implemented through an input/output interface (or a communication interface) of the chip or the chip system, and a function/an implementation process of the processing module 1201 may be implemented by using a processor (or a processing circuit) of the chip or the chip system.

The communication apparatus 120 provided in this embodiment may perform the foregoing methods. Therefore, for technical effects that can be achieved by the communication apparatus, refer to the foregoing method embodiments. Details are not described herein again.

In some embodiments, an embodiment of this application further provides a communication apparatus. The communication apparatus includes a processor. The processor is configured to implement the method in any one of the foregoing method embodiments.

In a possible implementation, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may not include the memory.

In another possible implementation, the communication apparatus further includes an interface circuit. The interface circuit is a code/data read/write interface circuit, and the interface circuit is configured to: receive computer-executable instructions (where the computer-executable instructions are stored in a memory, and may be directly read from the memory, or may be read via another device) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete device. This is not specifically limited in this embodiment of this application.

This application further provides a computer-readable storage medium. The computer-readable storage medium stores computer programs or instructions. When the computer programs or instructions are executed by a computer, a function in any one of the foregoing method embodiments is implemented.

This application further provides a computer program product. When the computer program product is executed by a computer, a function in any one of the foregoing method embodiments are implemented.

A person of ordinary skill in the art may understand that, for the purpose of convenient and brief description, for a detailed working process of the foregoing systems, apparatuses, and units, refer to a corresponding process in the foregoing method embodiments. Details are not described herein again.

It may be understood that the systems, apparatuses, and methods described in this application may alternatively be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electronic, mechanical, or other forms.

The units described as separate components may be physically separated or not, this is, may be located together in one position, or may be distributed on a plurality of network units. A component displayed as a unit may or may not be a physical unit. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some of the procedures or functions in embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, the word "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce better effects.

Although this application is described with reference to specific features and embodiments thereof, it is clear that various modifications and combinations may be made to this application without departing from the spirit and scope of this application. Correspondingly, this specification and accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the spirit and scope of this application. In this way, this application is intended to cover these modifications and variations of this application provided that they fall within the scope of protection defined by the claims of this application and their equivalent technologies.

## Claims

1. A communication method, wherein the method is applied to a first function node, and the method comprises:
determining first information, wherein the first information indicates a first bridge, and the first bridge comprises a proximity-based service connection 5 PC5 connection between at least two terminal devices and device-side translator ports of the at least two terminal devices; and the first information comprises at least one of an identifier of the first bridge, a quantity of ports in the first bridge, or port numbers of the device-side translator ports of the at least two terminal devices; and
sending the first information to a second function node.

2. The method according to claim 1, wherein the at least two terminal devices comprise a first terminal device and a second terminal device; and before determining the first information, the method further comprises:
receiving second information from the first terminal device, wherein the second information indicates a first PC5 connection, and the first PC5 connection is a PC5 connection between the first terminal device and the second terminal device.

3. The method according to claim 2, wherein the second information comprises a first layer 2 identifier and a second layer 2 identifier, wherein
the first layer 2 identifier is an identifier of the first terminal device on the first PC5 connection, and the second layer 2 identifier is an identifier of the second terminal device on the first PC5 connection.

4. The method according to claim 2 or 3, wherein the second information comprises an identifier of the first PC5 connection.

5. The method according to any one of claims 2 to 4, wherein the second information comprises at least one of the following: first identifier information, second identifier information, device-side translator port management capability information of the first terminal device, or first application information, wherein
the first identifier information comprises at least one of the following: a medium access control MAC address corresponding to a device-side translator port of the first terminal device, an international mobile subscriber identity IMSI of the first terminal device, a temporary mobile subscriber identity TMSI of the first terminal device, or an international mobile equipment identity IMEI of the first terminal device;
the second identifier information comprises at least one of the following: a MAC address corresponding to a device-side translator port of the second terminal device, an IMSI of the second terminal device, a TMSI of the second terminal device, or an IMEI of the second terminal device; and
the first application information comprises at least one of the following: an application identifier associated with the first PC5 connection, an application group identifier associated with the first PC5 connection, an application layer identifier associated with the first PC5 connection, or an identifier of a network served by the first terminal device.

6. The method according to any one of claims 2 to 5, wherein before determining the first information, the method further comprises:
receiving third information from the second terminal device, wherein the third information indicates the first PC5 connection.

7. The method according to any one of claims 1 to 6, wherein determining the first information comprises:
allocating port numbers to the device-side translator ports of the at least two terminal devices.

8. The method according to any one of claims 1 to 7, wherein the determining first information comprises:
determining the identifier of the first bridge.

9. The method according to claim 1, wherein the at least two terminal devices comprise a first terminal device and a second terminal device; and the method further comprises:
receiving fourth information from a third function node, wherein the fourth information comprises information about the first bridge, and the fourth information indicates that a device-side translator port of the first terminal device is associated with a device-side translator port of the second terminal device.

10. The method according to claim 9, wherein the fourth information comprises at least one of the following:
the identifier of the first bridge, a port number of the device-side translator port of the first terminal device, a port number of the device-side translator port of the second terminal device, or information indicating a first PC5 connection, wherein the first PC5 connection is a PC5 connection between the first terminal device and the second terminal device.

11. The method according to claim 10, wherein the fourth information further comprises a MAC address corresponding to the device-side translator port of the first terminal device and/or a MAC address corresponding to the device-side translator port of the second terminal device.

12. The method according to any one of claims 9 to 11, wherein the third function node is a policy control function PCF network element, or the third function node is deployed on the first terminal device.

13. The method according to claim 12, wherein the first terminal device has a node management function.

14. The method according to any one of claims 1 to 13, wherein the first function node is an application function AF network element.

15. The method according to any one of claims 1 to 11, wherein the first function node is a PCF network element.

16. The method according to claim 1, wherein the at least two terminal devices comprise a first terminal device, and the first function node is deployed on the first terminal device.

17. The method according to claim 16, wherein the at least two terminal devices further comprise a second terminal device, and the method further comprises:
sending fifth information to the second terminal device, wherein the fifth information indicates that the first function node is deployed on the first terminal device.

18. The method according to any one of claims 1 to 17, wherein the at least two terminal devices comprise the first terminal device and the second terminal device; and the method further comprises:
configuring a device-side translator of the first terminal device to perform link layer neighbor discovery on behalf of a device-side translator of the second terminal device.

19. The method according to any one of claims 1 to 18, wherein the second function node is a centralized network configuration CNC network element in time-sensitive networking TSN.

20. A communication method, wherein the method is applied to a third function node, and the method comprises:
determining fourth information, wherein the fourth information comprises information about a first bridge, the first bridge comprises a proximity-based service connection 5 PC5 connection between at least two terminal devices and device-side translator ports of the at least two terminal devices, the at least two terminal devices comprise a first terminal device and a second terminal device, there is a first PC5 connection between the first terminal device and the second terminal device, and the fourth information indicates that a device-side translator port of the first terminal device is associated with a device-side translator port of the second terminal device; and
sending the fourth information to a first function node.

21. The method according to claim 20, wherein the fourth information comprises at least one of the following:
an identifier of the first bridge, a port number of the device-side translator port of the first terminal device, a port number of the device-side translator port of the second terminal device, or information indicating the first PC5 connection.

22. The method according to claim 21, wherein at least one of the identifier of the first bridge, the port number of the device-side translator port of the first terminal device, and the port number of the device-side translator port of the second terminal device is determined based on configuration information.

23. The method according to any one of claims 20 to 22, wherein before determining the fourth information, the method further comprises:
receiving third information from the second terminal device, wherein the third information indicates the first PC5 connection.

24. The method according to any one of claims 20 to 23, wherein before determining the fourth information, the method further comprises:
receiving second information from the first terminal device, wherein the second information indicates the first PC5 connection.

25. The method according to claim 24, wherein the second information comprises a first layer 2 identifier and a second layer 2 identifier, wherein
the first layer 2 identifier is an identifier of the first terminal device on the first PC5 connection, and the second layer 2 identifier is an identifier of the second terminal device on the first PC5 connection.

26. The method according to claim 24 or 25, wherein the second information comprises an identifier of the first PC5 connection.

27. The method according to any one of claims 24 to 26, wherein the second information comprises at least one of the following: first identifier information, second identifier information, device-side translator port management capability information of the first terminal device, or first application information, wherein
the first identifier information comprises at least one of the following: a medium access control MAC address corresponding to the device-side translator port of the first terminal device, an international mobile subscriber identity IMSI of the first terminal device, a temporary mobile subscriber identity TMSI of the first terminal device, or an international mobile equipment identity IMEI of the first terminal device;
the second identifier information comprises at least one of the following: a medium access control MAC address corresponding to the device-side translator port of the second terminal device, an IMSI of the second terminal device, a TMSI of the second terminal device, or an IMEI of the second terminal device; and
the first application information comprises at least one of the following: an application identifier associated with the first PC5 connection, an application group identifier associated with the first PC5 connection, an application layer identifier associated with the first PC5 connection, or an identifier of a network served by the first terminal device.

28. The method according to any one of claims 20 to 23, wherein the third function node is deployed on the first terminal device.

29. The method according to claim 28, wherein the method further comprises:
sending sixth information to the second terminal device, wherein the sixth information indicates that the third function node is deployed on the first terminal device.

30. The method according to any one of claims 20 to 27, wherein the third function node is a policy control function PCF network element.

31. The method according to any one of claims 20 to 30, wherein the first function node is an application function AF network element.

32. A communication apparatus, wherein the communication apparatus comprises a processor, and the processor is configured to run a computer program or instructions, to enable the communication apparatus to perform the method according to any one of claims 1 to 19, or to enable the communication apparatus to perform the method according to any one of claims 20 to 31.

33. A computer-readable storage medium, wherein the computer-readable storage medium stores computer instructions or a program, and when the computer instructions or the program is run on a computer, the method according to any one of claims 1 to 19 is performed, or the method according to any one of claims 20 to 31 is performed.

34. A computer program product, wherein the computer program product comprises computer instructions, and when some or all of the computer instructions are run on a computer, the method according to any one of claims 1 to 19 is performed, or the method according to any one of claims 20 to 31 is performed.
